(19) **Europäisches Patentamt**
**European Patent Office**
**Office européen des brevets**

(11) **EP 3 970 927 B1**

(12) **EUROPEAN PATENT SPECIFICATION**

(45) Date of publication and mention
of the grant of the patent:
**01.05.2024 Bulletin 2024/18**

(21) Application number: **19928675.8**

(22) Date of filing: **13.05.2019**

(51) International Patent Classification (IPC):
**B25J 15/06** (2006.01)   **B25J 19/02** (2006.01)
**G01B 11/16** (2006.01)

(52) Cooperative Patent Classification (CPC):
**B25J 15/0683; B25J 19/023; G01B 11/165**

(86) International application number:
**PCT/JP2019/018988**

(87) International publication number:
**WO 2020/230248 (19.11.2020 Gazette 2020/47)**

(54) **SUCTION PAD AND DEFORMATION MEASURING DEVICE**

SAUGKISSEN UND VERFORMUNGSMESSVORRICHTUNG

VENTOUSE ET DISPOSITIF DE MESURE DE DÉFORMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2022 Bulletin 2022/12**

(73) Proprietor: **OMRON Corporation
Shiokoji-dori, Shimogyo-Ku
Kyoto-shi
Kyoto 600-8530 (JP)**

(72) Inventors:
• **KARAKO, Yukihisa
Kyoto-shi, Kyoto 600-8530 (JP)**
• **KAWAKAMI, Shinji
Kyoto-shi, Kyoto 600-8530 (JP)**

(74) Representative: **Horn Kleimann Waitzhofer
Schmid-Dreyer
Patent- und Rechtsanwälte PartG mbB
Theresienhöhe 12
80339 München (DE)**

(56) References cited:
EP-A1- 1 070 572     JP-A- 2008 051 288
JP-A- 2011 107 011     JP-A- 2018 176 297
JP-A- 2019 027 456     JP-A- 2019 027 456
JP-S- 1 261 640     US-A1- 2008 048 084
US-A1- 2014 161 582     US-A1- 2015 008 689
US-A1- 2016 243 708     US-A1- 2017 326 735
US-A1- 2018 281 207

**Description**

FIELD

The present invention relates to a suction pad and a deformation measuring device.

BACKGROUND

A known industrial robot may include a robotic arm including multiple arm components. For example, JP 2011 107011 A describes a robotic hand (robotic arm) for gripping a transport-target object. The robotic hand is included in a transport robot that transports a transport-target object. The robotic hand includes a hand unit with multiple bellows suction pads that are axially extendable under an elastic force to suck a transport-target object under vacuum pressure, and an axial-dimension sensor for measuring the axial dimension of each bellows suction pad that is sucking the object. Document EP 1 070 572 A1 discloses a vacuum cup apparatus comprising: a flexible member having a front side engageable with a workpiece and a back side connectable to a manipulator; a passageway extending from said front side to said back side of said flexible member and communicable with a vacuum source to provide vacuum to said front side of said flexible member; and a recessed pocket formed in said front side of said flexible member and having a lip defining so an opening into said recessed pocket, said lip being engageable with said workpiece for maintaining atmospheric pressure within said recessed pocket when engaged with said workpiece.
Document JP 2019 027456 A discloses a suction cup comprising: a main body made of an elastic body having a recess on the suction surface side.
Document US 2016 0243708 A1 discloses a sucker comprising a main body, a disc body made of a flexible material, an air passage positioned in the main body and the disc body, and a fast flow way.
Document US 2014 0161582 discloses a gripping element having a body comprising: a first portion coupling with a manipulator and a second portion, that is at least in part elastically deformable, and at least one duct for the air intake.
Document US 2015 0008689 A1 discloses a suction structure comprising a pad including a contact portion and a major surface portion, and a fixing base.

SUMMARY

TECHNICAL PROBLEM

With the above known technique, the axial-dimension sensor included in the robotic hand detects a transport-target object but does not detect a deformation of each suction pad. This structure may fail to precisely determine whether each suction pad is sucking the transport-target object. Further, the suction pads described in said JP 2011 107011 A may not allow measurement of their deformations for controlling the movement of the robotic hand in accordance with the changing deformations of the suction pads.
In response to this, one or more aspects of the present invention are directed to a suction pad that allows measurement of its deformation.

SOLUTION TO PROBLEM

In response to the above issue, the suction pad according to the present invention has the features defined in the independent claim.
A suction pad according to one aspect of the present disclosure is a suction pad for sucking an object under a negative pressure. The suction pad includes a stationary section fixable on a support, and a deformable section deformable under the negative pressure. The deformable section includes a plurality of marks at a plurality of positions spaced from one another and displaceable with respect to the stationary section in response to deformation of the deformable section. The plurality of marks are optically identifiable. The plurality of marks are continuous across the plurality of positions or are separate at the plurality of positions.
The above structure allows measurement of the loading force and the tilting of the suction pad as the deformations of the suction pad, and allows precise detection of whether the suction pad is in contact with the object.
In the suction pad according to the above aspect, the plurality of marks may include a lattice pattern.
The above structure allows more detailed measurement of the deformations of the suction pad, and allows more precise detection of whether the suction pad is in contact with the object.
In the suction pad according to the above aspect, the plurality of marks may include a plurality of markers at the plurality of positions on the deformable section viewable from one viewpoint.
The above structure allows more precise measurement of the deformations of the suction pad, and allows precise detection of whether the suction pad is in contact with the object.

In the suction pad according to the above aspect, the plurality of marks may include a plurality of markers at three or more positions spaced from one another on the deformable section as viewed in a lateral direction of the suction pad.

The above structure allows measurement of the tilting of the suction pad in the two directions in addition to the loading force of the suction pad as the deformations of the suction pad, and allows precise detection of whether the suction pad is in contact with the object.

In the suction pad according to the above aspect, the plurality of marks may be adjacent to a part of the deformable section to be in contact with the object.

The above structure includes the marks close to the area of contact between the suction pad and the object with larger deformations of the suction pad, and thus facilitates detection of the deformations.

In the suction pad according to the above aspect, the deformable section may have a bellows shape.

The above structure facilitates detection of the deformations and improves the precision of measurement performed by the deformation measuring device including the suction pad.

In the suction pad according to the invention, the marks are formed from a retroreflective material.

The above structure facilitates detection of the deformations and improves the precision of measurement performed by the deformation measuring device including the suction pad.

A deformation measuring device according to another aspect of the present disclosure is a deformation measuring device including the suction pad, an image obtainer that obtains image data by capturing an image of the deformable section, a feature point specifier that specifies, based on the plurality of marks included in the image data, a plurality of feature points included in the image data corresponding to the plurality of positions on the deformable section, and a deformation determiner that determines a deformation at each of the plurality of positions on the deformable section based on the plurality of feature points.

The above structure can determine the deformations of the suction pad, and allows precise determination of whether the suction pad is sucking the object.

The deformation measuring device may further include an imaging device installable lateral to the suction pad. The imaging device may capture an image of the deformable section.

The above structure specifies the feature points from the image data obtained by capturing the deformable section of the suction pad, and can determine the deformation of the deformable section.

## ADVANTAGEOUS EFFECTS

The suction pad according to the above aspects of the present invention allows measurement of its deformation.

## BRIEF DESCRIPTION OF THE DRAWINGS

FIG. 1A is a side view of a suction pad according to an embodiment, FIG. 1B is a top view of the suction pad, and FIGs. 1C and 1D are side views of the suction pad, each showing an example appearance.

FIGs. 2A and 2B are diagrams describing example deformations of the suction pad according to the present embodiment.

FIGs. 3A to 3D are diagrams of suction pads according to one or more embodiments, each showing an example appearance.

FIGs. 4A to 4H are diagrams of suction pads according to one or more embodiments, each showing an example manner of deformation determination.

FIG. 5A is a schematic diagram of a deformation measuring device according to the present embodiment showing an example structure, and FIG. 5B is a partially enlarged view of the deformation measuring device according to the present embodiment showing an example structure.

FIG. 6 is a schematic block diagram of the deformation measuring device according to the present embodiment.

FIG. 7A is a diagram describing example image data input into a feature point specifier included in the deformation measuring device according to the present embodiment, FIG. 7B is a diagram describing an example process performed by the feature point specifier in the deformation measuring device according to the present embodiment, and FIG. 7C is a diagram showing example coordinate values output from the feature point specifier in the deformation measuring device according to the present embodiment.

FIGs. 8A and 8B are schematic diagrams of a suction transport apparatus in the present embodiment, each showing an example hardware configuration.

FIG. 9 is a flowchart of an example calibration process performed by the deformation measuring device according to the present embodiment.

FIGs. 10A to 10F are schematic diagrams each showing an example process performed by the deformation measuring device according to the present embodiment.

FIG. 11 is a flowchart of an example process performed by the deformation measuring device according to the present embodiment.

FIGs. 12A and 12B are diagrams describing orientation control for the suction pad according to the present embodiment.

FIG. 13 is a flowchart of an operation of a deformation measuring device according to an embodiment of the present invention.

FIG. 14 is a flowchart of an operation of the deformation measuring device according to another embodiment of the present invention.

FIG. 15 is a flowchart of an operation of the deformation measuring device according to still another embodiment of the present invention.

FIG. 16A is a partially enlarged view of a deformation measuring device according to a first modification of the present embodiment showing an example structure, and FIG. 16B is a partially enlarged view of a deformation measuring device according to a second modification of the present embodiment showing an example structure.

FIG. 17 is a schematic block diagram of a deformation measuring device according to a third modification of the present embodiment.

FIG. 18 is a flowchart of an example process performed by the deformation measuring device according to the third modification of the present embodiment.

DETAILED DESCRIPTION

One or more embodiments of the present invention (hereafter, the present embodiment) will now be described with reference to the drawings.

1. Example Use

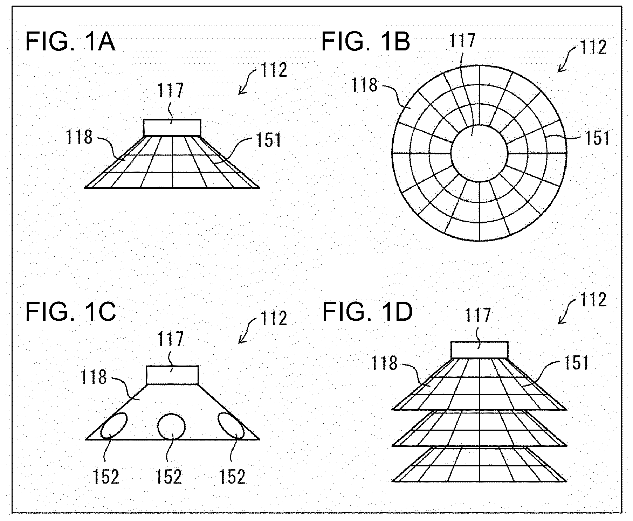

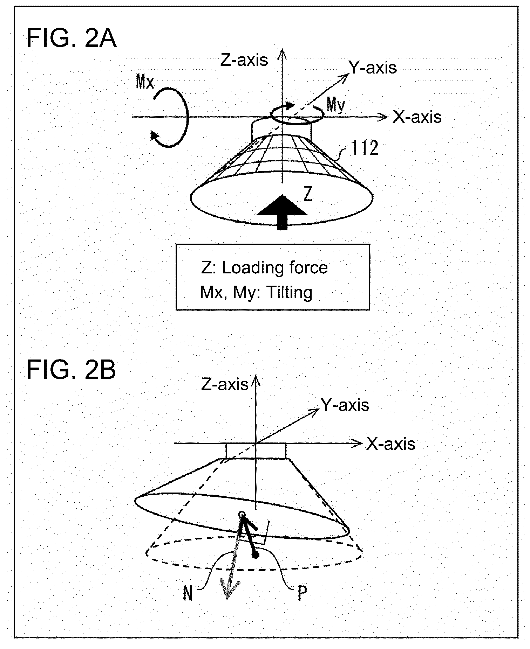

FIGs. 1A to 1D are diagrams of a suction pad 112 according to the present embodiment each showing an example structure. FIGs. 2A and 2B are schematic diagrams describing deformations of the suction pad 112 according to the present embodiment. Example uses of the technique according to one or more embodiments of the present invention will be described with reference to FIGs. 1A to 2B. The suction pad 112 can be attached to a distal end of an arm included in a transport robot that transports an object to an intended position.

As shown in FIGs. 1A to 1D, the suction pad 112 sucks an object under a negative pressure. The suction pad 112 includes a stationary section 117 fixed to a support, and a deformable section 118 that is deformable under a negative pressure. The suction pad 112 includes, on the deformable section 118, optically identifiable marks at multiple positions spaced from one another and displaceable with respect to the stationary section 117 in response to deformation of the deformable section 118. The marks may be continuous across the multiple positions or may be separate at the multiple positions. The marks may be a pattern including repeating unit shapes, such as lattices, points, straight lines, curves, circles, various polygons, or combinations of these. The multiple unit shapes may be at equal intervals or unequal intervals. The suction pad 112 may have any structure that deforms under a negative pressure to suck and grip an object.

The suction pad 112 includes such optically identifiable marks on the deformable section to measure three-dimensional (3D) deformation behavior of the suction pad 112. The optically identifiable marks at multiple positions spaced from one another and displaceable with respect to the stationary section 117 in response to deformation of the deformable section (hereafter, at multiple positions on the deformable section 118) allow detection of the deformations of the suction pad 112. The deformations of the suction pad 112 can be used to precisely detect whether the suction pad 112 is in contact with an object. The deformations of the suction pad 112 with any shape and formed from any material can be measured.

Defining Deformations of Suction Pad 112

The deformations of the suction pad 112 will be defined with reference to FIGs. 2A and 2B.

The definition 1 for the deformations of the suction pad 112 will first be described with reference to FIG. 2A.

As shown in FIG. 2A, the suction pad 112 is substantially conical and has an open bottom (sucking surface). The X-axis and the Y-axis are defined in two perpendicular directions parallel to the sucking surface of the suction pad being undeformed, and the Z-axis is defined in the direction normal to the sucking surface of the undeformed suction pad. In the definition 1 for the deformations of the suction pad 112, the tilting of the suction pad 112 is represented by the rotational amount Mx about the X-axis and the rotational amount My about the Y-axis. In the definition 1, the deformations of the suction pad 112 are represented by the rotational amounts Mx and My and the loading force Z in Z-direction.

The definition 2 for the deformations of the suction pad 112 will be described with reference to FIG. 2B.

A vector P connects the center of the sucking surface of the undeformed suction pad 112 and the center of the sucking surface of the suction pad 112 being deformed. The suction pad 112 being deformed has a unit normal vector N. In the definition 2, the projection of the vector N to the X-axis is the projection ex, the projection of the vector N to the Y-axis is the projection ey, and the projection of the vector P to the Z-axis is the projection ez. In the definition 2, the vector N has the X-axis component ex and the Y-axis component ey, and the vector P has the Z-axis component ez. In the definition 2, the deformations of the suction pad 112 are represented by {ex, ey, ez}.

For the definitions 1 and 2, an equivalent volume of information is obtained as the deformation of the suction pad 112.

2. Structure

Suction Pad

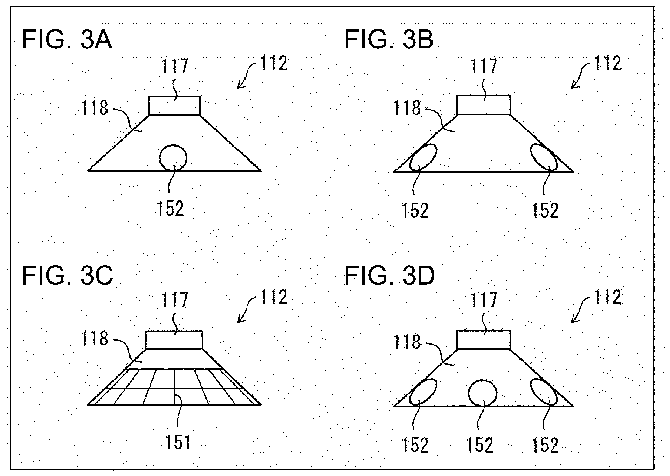

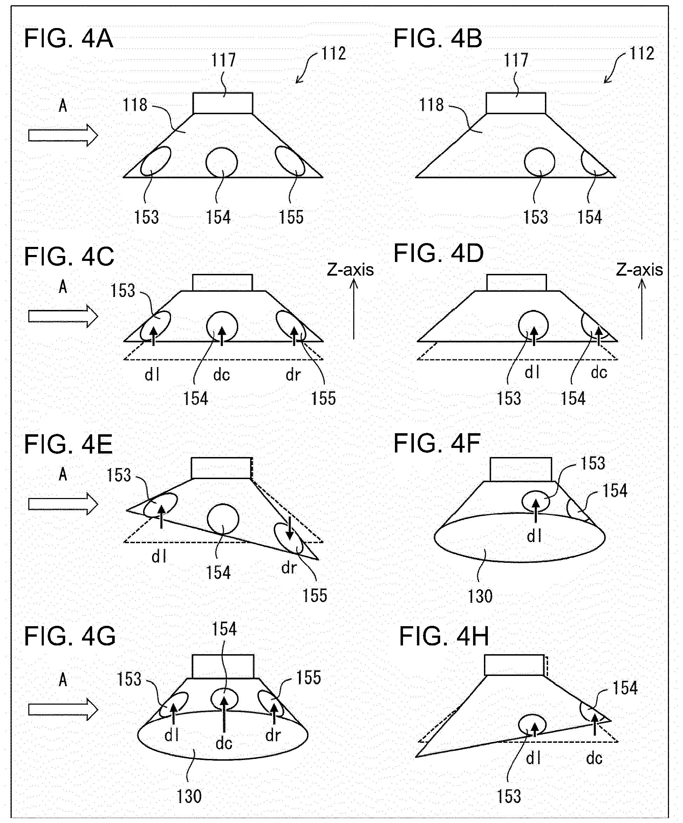

FIGs. 1A to 1D are diagrams of the suction pad 112 according to the present embodiment, each showing an example structure. FIGs. 3A to 3D are diagrams of the suction pad according to the present embodiment, each showing an example structure. FIGs. 4A to 4H are diagrams of the suction pad according to the present embodiment, each showing an example manner of deformation determination. The structure of the suction pad 112 according to the present embodiment will be hereafter described with reference to FIGs. 1A to 1D, 3A to 3D, and 4A to 4H.

In the example of FIGs. 1A to 1D, the suction pad 112 includes the stationary section 117 and the deformable section 118.

FIG. 1A is an example side view of the suction pad 112. FIG. 1B is an example top view of the suction pad 112 shown in FIG. 1A. In the examples of FIGs. 1A and 1B, the suction pad 112 has a lattice pattern 151 on the deformable section 118. The lattice pattern 151 on the deformable section 118 allows precise measurement of the deformations of the suction pad 112, and allows precise detection of the contact between the suction pad 112 and an object. The lattice pattern 151 is formed from a retroreflective material and may be colored. To allow precise measurement of the deformations of the suction pad 112, the lattice pattern 151 is formed from a retroreflective material.

FIG. 1C is an example side view of another suction pad 112. In the example of FIG. 1C, the suction pad 112 has circular marks 152 on the deformable section 118. The suction pad 112 may have any mark(s) or pattern that allows displacement of a part of the deformable section 118 having the pattern to be viewable. The mark may be, for example, circular, quadrilateral, star-shaped, or a cross. The mark is formed from a retroreflective material and may be colored. To allow precise measurement of the deformations of the suction pad 112, the mark is formed from a retroreflective material.

In the example of FIG. 1C, the suction pad 112 has markers (marks) 152 at three positions on the deformable section 118 in a manner viewable from a single viewpoint such as from a camera. More specifically, as the suction pad 112 is viewed laterally, the markers (marks) 152 are at three positions spaced from one another on the deformable section 118. The lateral direction of the suction pad 112 refers to the direction perpendicular to an axis perpendicular to the sucking surface of the suction pad 112. The markers at the multiple positions on the deformable section 118 viewable from a single viewpoint allow imaging of the suction pad 112 before and after deformation to generate image data, which is then used to calculate the deformations of the suction pad 112. The markers at the three positions spaced from one another on the deformable section 118 as the suction pad 112 is viewed laterally allow imaging with a single camera to generate an image, which is then used to calculate the loading force Z and the two rotational amounts (tilts) Mx and My indicating the tilting in the two directions shown in FIG. 2A.

FIG. 1D is an example side view of another suction pad 112. In the example of FIG. 1D, the suction pad 112 includes a bellows deformable section 118. The bellows deformable section 118 causes a distal portion of the suction pad 112 (at the sucking surface) to deform largely. This allows precise detection of whether the suction pad 112 is in contact with an object.

A largely deformable part of the deformable section 118, such as a part close to the sucking surface, may have marks for easier detection of the deformations. The deformable section 118 may have marks adjacent to an area of contact between the deformable section 118 and an object.

FIG. 3A is an example side view of another suction pad 112. In the example of FIG. 3A, the suction pad 112 has a circular mark 152 at a single position on the deformable section 118 in a manner viewable from a single viewpoint such as from a camera. The mark at the single position on the deformable section 118 viewable from a single viewpoint allows measurement of the loading force Z shown in FIG. 2A.

FIG. 3B is an example side view of another suction pad 112. In the example of FIG. 3B, the suction pad 112 has circular marks 152 at two positions on the deformable section 118 in a manner viewable from a single viewpoint such as from a camera. For example, two marks 152 may be formed on both sides of the center of the deformable section 118. The marks at the two positions on the deformable section 118 viewable from a single viewpoint such as from a camera allow measurement of the loading force Z shown in FIG. 2A and one of the rotational amounts (tilts) Mx and My indicating the tilting.

FIG. 3C is an example side view of another suction pad 112. In the example of FIG. 3C, the suction pad 112 has a lattice pattern 151 on the deformable section 118 in a manner viewable from a single viewpoint such as from a camera. The lattice pattern 151 on the deformable section 118 viewable from a single viewpoint such as from a camera allows measurement of the loading force Z shown in FIG. 2A and the two rotational amounts (tilts) Mx and My indicating the tilting in the two directions. This allows precise detection of whether the suction pad is in contact with an object.

FIG. 3D is an example side view of another suction pad 112. In the example of FIG. 3D, the suction pad 112 has circular marks 152 at three positions on the deformable section 118 in a manner viewable from a single viewpoint such as from a camera. For example, the three marks 152 are at the center of the deformable section 118 and on both sides of the center of the deformable section 118. The marks at the three positions on the deformable section 118 viewable from a single viewpoint such as from a camera allow measurement of the loading force Z shown in FIG. 2A and the two rotational amounts (tilts) Mx and My indicating the tilting in the two directions. This allows precise detection of whether the suction pad is in contact with an object.

FIGs. 4A to 4H are diagrams of the suction pad 112 in FIG. 3D, each showing an example manner of deformation determination. In FIGs. 4A to 4H, dl is the displacement (movement) of the center of a circular mark 153, dc is the displacement (movement) of the center of a circular mark 154, and dr is the displacement (movement) of the center of a circular mark 155.

FIG. 4A is an example front view of the suction pad 112 being undeformed. FIG. 4B is an example side view of the suction pad 112 shown in FIG. 4A as viewed in direction A. The suction pad 112 shown in FIG. 4A includes the left mark 153 and the right mark 155 that are symmetric to each other with respect to the mark 154 in the middle.

FIG. 4C is a diagram describing the manner of determining the loading force as one example deformation. FIG. 4C is an example front view of the suction pad 112 that has been loaded in Z-direction. FIG. 4D is an example side view of the suction pad 112 in FIG. 4C as viewed in direction A. In the examples of FIGs. 4C and 4D, the loading force is determined using Formula 1 below.

$$\text{Loading force} = (dl + dr)/2 \qquad (1)$$

FIG. 4E is a diagram describing the manner of determining the rotational amount (tilt) indicating the tilting as one example deformation. FIG. 4E is an example front view of the suction pad 112 that has tilted laterally as viewed from a single viewpoint such as from a camera. FIG. 4F is an example side view of the suction pad 112 in FIG. 4E as viewed in direction A. In the examples of FIGs. 4E and 4F, the tilt is determined using Formula 2 below.

$$\text{Tilt} = W1 \times (dl - dr)/2 \qquad (2)$$

In Formula 2, W1 is a constant determined through calibration (described later).

FIG. 4G is a diagram describing the manner of determining the rotational amount (tilt) indicating the tilting as one example deformation. FIG. 4G is an example front view of the suction pad 112 that has tilted in the depth direction from a single viewpoint such as from a camera. FIG. 4H is an example side view of the suction pad 112 in FIG. 4G as viewed in direction A. In the examples of FIGs. 4G and 4H, the tilt is determined using Formula 3 below.

$$\text{Tilt} = W2 \times (dc - (dl + dr)/2) \qquad (3)$$

In Formula 3, W2 is a constant determined through calibration (described later).

Deformation Measuring Device

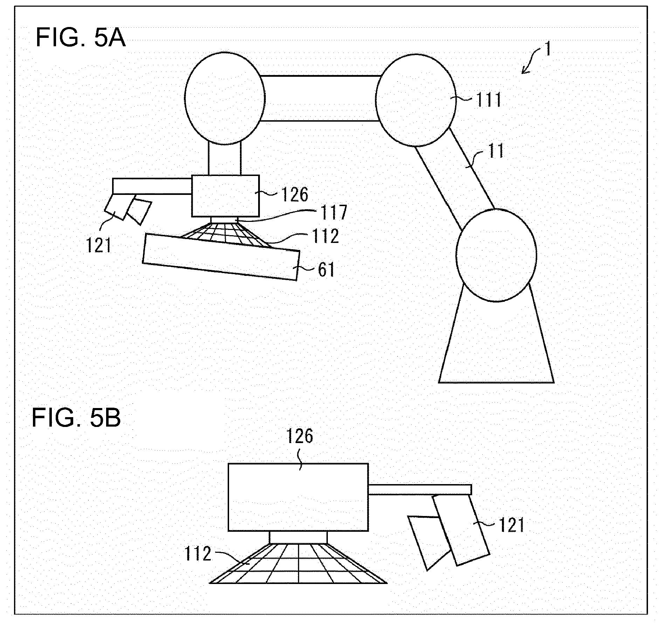

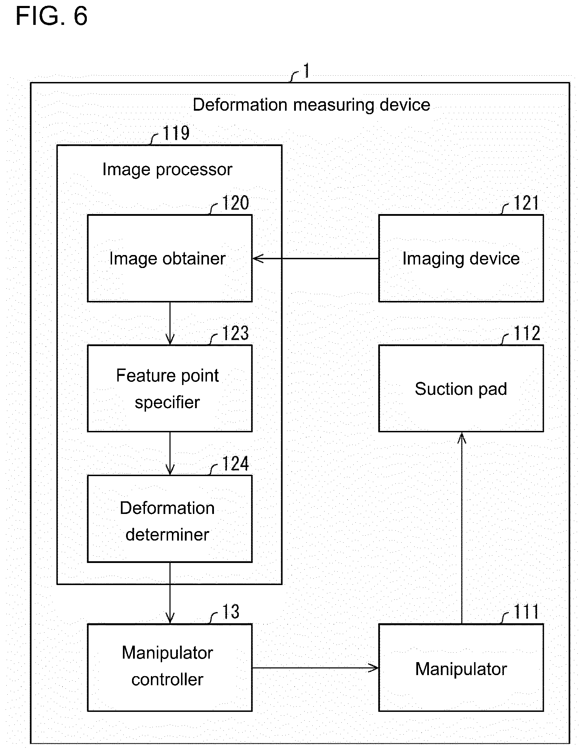

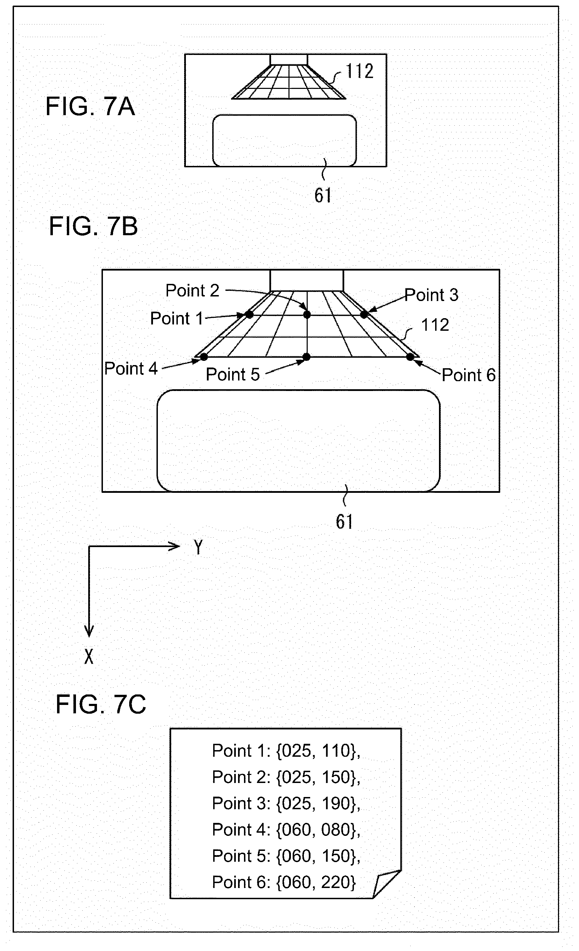

FIG. 5A is a schematic diagram of a deformation measuring device 1 according to the present embodiment showing an example structure. FIG. 5B is a partially enlarged view of the deformation measuring device 1 shown in FIG. 5A. FIG. 6 is a schematic block diagram of the deformation measuring device 1 according to the present embodiment. FIG. 7A is a diagram describing example image data input into a feature point specifier 123 included in the deformation measuring device 1 according to the present embodiment. FIG. 7B is a diagram describing an example process performed by the feature point specifier 123 in the deformation measuring device 1 according to the present embodiment. FIG. 7C is a diagram showing example coordinate values output from the feature point specifier 123 in the deformation measuring device 1 according to the present embodiment. The structure of the deformation measuring device 1 according to one or more embodiments of the present invention will now be described in detail with reference to FIGs. 5A to 7C.

In the example of FIG. 5A, the deformation measuring device 1 includes a robotic arm 11 and a vacuum pump (not shown). The robotic arm 11 includes the suction pad 112, an imaging device 121, a support 126 supporting the suction pad 112, and a manipulator 111. The support 126 receives an end effector attached to a hand end of the manipulator 111. The stationary section 117 included in the suction pad 112 is fixed to the support 126. In the example of FIG. 5B, the imaging device 121 is fixed to the support 126 to be adjacent to the suction pad 112. The imaging device 121 can thus capture an image of the deformable section 118 included in the suction pad 112. The imaging device 121 can capture images of or other data about the state of the deformable section 118 of the suction pad 112 before and after deformation. The obtained data can then be used to calculate the deformations of the suction pad 112.

In the example of FIG. 6, the deformation measuring device 1 includes the suction pad 112, the imaging device 121, the manipulator 111, an image processor 119, and a manipulator controller 13. The image processor 119 includes an image obtainer 120, the feature point specifier 123, and a deformation determiner 124.

The imaging device 121 captures an image of the deformable section 118 of the suction pad 112. The image data may be monochrome or colored. In the example of FIG. 7A, the imaging device 121 generates image data by capturing an image of the suction pad 112 and an image of an object 61.

The image obtainer 120 obtains image data generated through image capturing performed by the imaging device 121. The image data is then input into the feature point specifier 123.

The feature point specifier 123 specifies feature points expressing the deformable section 118 included in the image data input from the image obtainer 120. In the example of FIG. 7B, the feature point specifier 123 specifies feature points 1 to 6 in the image data corresponding to multiple positions on the deformable section 118 based on the marks on the deformable section 118 included in the input image data shown in FIG. 7A. The feature point specifier 123 outputs the coordinate values indicating the specified feature points in the image coordinate system to the deformation determiner 124. In the example of FIG. 7C, the coordinate values output from the feature point specifier 123 indicate the feature points 1 to 6. The feature point specifier 123 specifies, as reference coordinates, the coordinates (multiple coordinates) for the stationary section 117 that is undeformable. The displacements of the feature points can be determined based on the coordinates indicating the feature points with respect to the reference coordinates.

The deformation determiner 124 determines deformations at multiple positions on the deformable section 118 (and thus the deformations of the suction pad) based on the feature points (coordinate values) output from the feature point specifier 123 and the coordinates for the stationary section 117. A function that specifies (predicts) and returns a deformation against an input feature point is referred to as a predictive model for predicting the deformations of the suction pad. The predictive model may be a white box model using a-priori information such as the mechanism of or the material for the suction pad 112 or may be a black box model using approximation of a nonlinear input-output system, such as a neural network.

To allow precise deformation determination using the predictive model for the deformations of the suction pad, the parameters for the predictive model may be adjusted (calibrated). The parameters resulting from such calibration are referred to as calibrated parameters. The calibration may be referred to as the calibration for the deformation measuring device. The calibration process will be described later.

The manipulator controller 13 determines the operation of the manipulator 111 based on the deformations determined by the deformation determiner 124. The manipulator controller 13 then controls the manipulator 111 to perform the determined operation.

The manipulator 111 is driven together with the suction pad 112 in the robotic arm 11 as controlled by the manipulator controller 13.

Suction Transport Apparatus

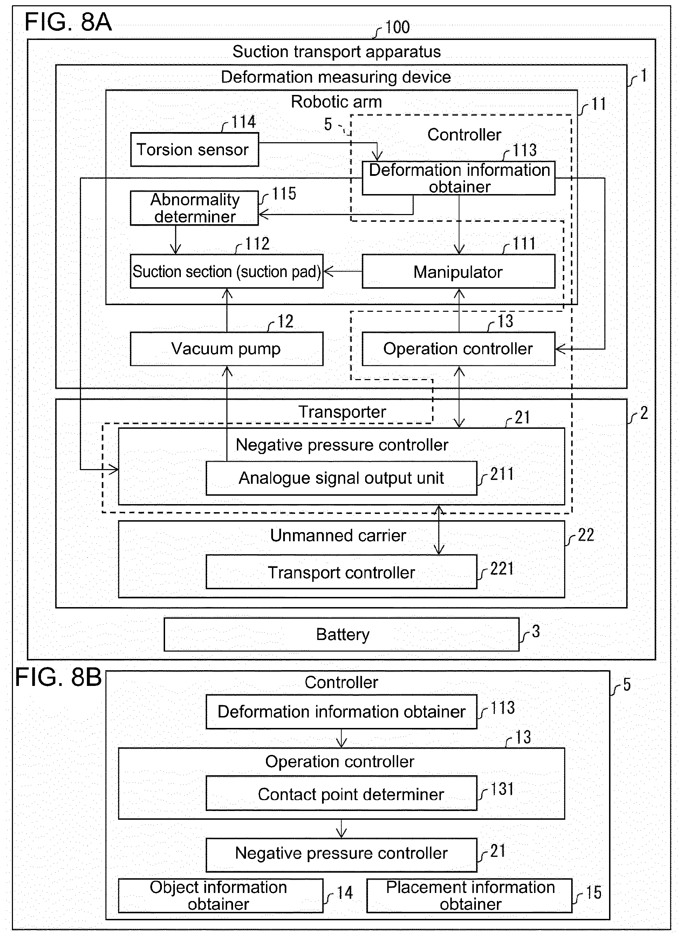

A suction transport apparatus 100 including the deformation measuring device according to the present embodiment will now be described with reference to FIGs. 8A and 8B, showing an example hardware configuration.

FIGs. 8A and 8B are schematic block diagrams of the suction transport apparatus 100 in the present embodiment, each showing an example configuration. In the example of FIGs. 8A and 8B, the suction transport apparatus 100 in the present embodiment includes the deformation measuring device 1, a transporter 2, and a battery 3. The deformation measuring device 1 includes the robotic arm 11, a vacuum pump 12, and an operation controller (manipulator controller) 13. The robotic arm 11 includes the manipulator 111, the suction pad 112, a deformation information obtainer 113, and the operation controller 13.

Deformation Information Obtainer

The deformation information obtainer 113 obtains information about the deformation behavior of the suction pad 112. For example, the deformation information obtainer 113 obtains data indicating distortion of the suction pad 112 from a torsion sensor 114. The deformation information obtainer 113 determines the deformations of the suction pad 112 based on data indicating the distortion. Specific examples of the distortion will be described later.

The deformation information obtainer 113 may obtain, from the torsion sensor 114, information about the deformations, the deformation speed, or the acceleration of deformation as information about such distortion behavior. In this case, the torsion sensor 114 performs the processing for obtaining the deformations, the deformation speed, or the acceleration of deformation.

The deformation information obtainer 113 may obtain, from multiple torsion sensors, information about deformation behavior at multiple positions on the suction pad 112. In the present embodiment, the deformation information obtainer 113 may have any structure that can obtain information about the deformation behavior of the suction pad 112. In the present embodiment, the deformation information obtainer 113 may obtain, for example, information about deformation behavior from one or more sensors installed on or incorporated in the suction pad 112. The sensor(s) installed on or incorporated in the suction pad 112 facilitate detection of the deformation behavior of the suction pad 112. The sensor(s) may be incorporated in the suction pad 112 at positions corresponding to the torsion sensor 114. The sensor(s) to be incorporated in the suction pad 112 may be, for example, distortion gauge sensors or pressure-sensitive conductive sensors formed from rubber or resin containing a conductive material, such as carbon nanotubes or a carbon resin.

The deformation information obtainer 113 may obtain information about deformation behavior from one or more optical displacement gauges (range sensors such as laser displacement sensors) or shape measurement sensors, instead of the torsion sensor 114. Similarly to the torsion sensor(s) 114, for example, one or more optical displacement gauges or shape measurement sensors may be installed on the suction pad 112. The optical displacement gauges or the shape measurement sensors can detect the deformation behavior (shape changes) of the suction pad 112 by detecting light reflected from the suction pad 112 and measuring the displacement of the suction pad 112. In particular, a single two-dimensional (2D) shape measurement sensor in the suction pad 112 can detect deformation behavior at multiple positions on the suction pad 112. The optical displacement gauge(s) may be, for example, short-range displacement sensors that are inexpensive. The shape measurement sensor(s) may be, for example, 2D shape measurement sensors that are smart sensors.

In some embodiments, the deformation information obtainer 113 may include a proximity sensor instead of the torsion sensor 114. For example, the deformation information obtainer 113 may include one or more proximity sensors on the suction pad 112, similarly to the torsion sensor(s) 114. The proximity sensor(s) can measure the displacement in the distance between the proximity sensor(s) and the suction pad 112 to detect the deformation behavior (shape changes) of the suction pad 112. The proximity sensors may be, for example, ultrasonic sensors, induction proximity sensors, capacitance proximity sensors, or optical proximity sensors.

The deformation information obtainer 113 outputs deformation data including the deformations of the suction pad 112, the deformation speed, and the acceleration of deformation to the manipulator controller 13 and a negative pressure controller 21.

Abnormality Determiner

An abnormality determiner 115 may determine that an object is being sucked by the suction pad 112 in response to the deformation(s) of the suction pad 112 being a predetermined amount or more in a predetermined period after the suction pad 112 stops sucking (vacuuming) the object and releasing the object. In other words, the abnormality determiner 115 may determine that the object is being sucked by the suction pad 112 in response to the deformation(s) of the suction pad 112 being a predetermined amount or more in a predetermined period after the vacuum disappears between the suction pad 112 and the object (after the vacuum breaks).

In this case, the abnormality determiner 115 may generate an alert or may cause the suction pad 112 to perform an operation to drop the object (to place the object). This prevents a failure in the placement operation due to, for example, the object remaining on the suction pad 112 after the vacuum breaks. Vacuum Pump

The vacuum pump 12 generates a negative pressure in accordance with its drive amount, and provides the negative pressure to the suction pad 112. In the example described below, the deformation measuring device 1 in the suction transport apparatus 100 includes the vacuum pump 12. In the present embodiment, the vacuum pump 12 may not be included in the deformation measuring device 1 in the suction transport apparatus 100 but may be external to the deformation measuring device 1 and the suction transport apparatus 100. In this case, the negative pressure controller 21 controls the drive amount of the vacuum pump 12 to allow this structure to produce the same advantageous effects as described in the above embodiment.

Operation Controller

The operation controller 13 includes, for example, a central processing unit (CPU), a random-access memory (RAM), or a read-only memory (ROM). The operation controller 13 performs control in accordance with intended information processing. The manipulator controller 13 controls the manipulator 111 in the robotic arm 11 based on manipulator control signals output from the negative pressure controller 21. The manipulator controller 13 thus controls the manipulator 111 that then moves the suction pad 112. More specifically, the manipulator controller 13 drives the manipulator 111 to cause the suction pad 112 in the robotic arm 11 to be at the work position to suck an object. After the suction pad 112 moves to the work position, the manipulator controller 13 may control the manipulator 111 to cause the suction pad 112 to be at a predetermined angle with the object. This precisely aligns the suction pad 112 at an intended position. Once the suction pad 112 sucks the object, the manipulator controller 13 may drive the manipulator 111 to cause the suction pad 112 in the robotic arm 11 to be in a predetermined box (not shown) installed in an upper portion of the manipulator controller 13.

The manipulator controller 13 may determine the direction in which the suction pad 112 is to move and cause sucking of the object again based on the deformations of the suction pad 112 at multiple positions.

To prevent the suction transport apparatus 100 in operation from being stopped at varying positions in an operation of picking (or sucking) an object with the suction pad 112, the suction transport apparatus 100 measures the positional relationship between the apparatus and the object using 2D vision or 3D vision. In this case, for example, errors in measuring the positional relationship between the object and the suction transport apparatus 100 may cause the suction pad 112 to perform an erroneous operation for picking the object.

In response to this, the above structure can move the suction pad 112 not in full contact with the object in a direction to cause the suction pad 112 to suck the object again. This structure prevents the suction pad 112 from performing an erroneous operation for picking the object.

When the suction pad 112 undergoes a larger deformation at a first position than at a second position among other positions of the suction pad 112, the manipulator controller 13 may move the suction pad 112 toward the first position away from the second position (opposite to the position at which the sensor for measuring a smaller deformation is located) to cause sucking of the object again. This prevents the suction pad 112 from deviating from the suction position. The suction pad 112 is thus less likely to perform an erroneous operation for picking the object.

Operation Controller

The operation controller 13 may further include a contact point determiner 131. The contact point determiner 131 determines the point of contact between the suction pad 112 and the object based on the deformation behavior of the suction pad 112 (the deformations, the deformation speed, or the acceleration of deformation). The contact point determiner 131 also determines the point of contact between the object and a placement target surface while the suction pad 112 is sucking the object based on the deformation behavior of the suction pad 112 (the deformations, the deformation speed, or the acceleration of deformation). The operation controller 13 causes the manipulator 111 to move the suction section (suction pad) 112 toward the sucking surface with reference to the point of contact determined by the contact point determiner 131 to accommodate any errors in measuring the positional and orientational relationship between the object and the suction transport apparatus 100. The suction section 112 is still less likely to perform an erroneous operation for picking the object.

Transporter

The transporter (unmanned carrier) 2 includes the negative pressure controller (control signal output unit) 21 and an unmanned carrier 22.

Negative Pressure Controller

The negative pressure controller 21 includes, for example, a CPU, a RAM, or a ROM. The negative pressure controller 21 performs control in accordance with intended information processing. The negative pressure controller 21 includes, for example, a programmable logic controller (PLC) or a microcomputer. The negative pressure controller 21 controls the vacuum pump 12 that generates a negative pressure based on output signals received from one or more torsion sensors 114 included in the deformation information obtainer 113 and based on transport state signals received from a transport controller 221 included in the unmanned carrier 22.

The negative pressure controller 21 controls the on and off states of the vacuum pump 12 based on signals from the operation controller 13. For picking an object, for example, the negative pressure controller 21 turns on the vacuum pump 12 in response to a determination that the suction pad 112 has sufficiently loaded the object based on the deformation behavior of the suction pad 112. For placing an object on a platform, the negative pressure controller 21 turns off the vacuum pump 12 when the operation controller 13 determines that the entire bottom of the object is in contact with the placement target surface of the platform.

The negative pressure controller 21 outputs, to the manipulator controller 13, manipulator control signals for controlling the manipulator 111.

The negative pressure controller 21 may include an analogue signal output unit 211 that outputs an analogue signal as a control signal for the vacuum pump 12. The analogue signal output unit 211 may perform control that allows a monotonic increase or a monotonic decrease in an output analogue signal. This allows the drive amount of the vacuum pump 12 to change with a gradient, thus reducing an inrush current and consumption power and allowing stable control.

Unmanned Carrier

In the example of FIGs. 8A and 8B, the unmanned carrier 22 includes the transport controller 221. The transport controller 221 controls the movement (transportation) of the suction transport apparatus 100 by controlling the transportation of the unmanned carrier 22. For example, the transport controller 221 moves the suction transport apparatus 100 to the work position at which the robotic arm 11 can grip an object. The transport controller 221 does not move the suction transport apparatus 100 already at the work position. The unmanned carrier 22 transmits a transport state signal indicating the transport state of the unmanned carrier 22 to the negative pressure controller 21.

Battery

The battery 3 supplies power to the components of the suction transport apparatus 100, or more specifically, the deformation measuring device 1 and the transporter 2, to control the components of the suction transport apparatus 100.

Although the suction transport apparatus 100 operates on the battery 3 in the above example, the present embodiment is not limited to this example. In the present embodiment, the suction transport apparatus 100 may supply power externally through a power supply cord.

Controller

A controller 5 includes the deformation information obtainer 113, which obtains information about the deformation behavior of the suction pad 112, and the operation controller 13, which controls the movement of the suction pad 112 in accordance with the deformation behavior of the suction pad 112. More specifically, the operation controller 13 changes the movement (at least one of the direction of movement, the speed, or the tilting) of the suction pad 112 in accordance with the deformation behavior of the suction pad 112.

The controller 5 further includes an object information obtainer 14, which obtains information about an object, and a placement information obtainer 15, which obtains information about a platform onto which an object is to be placed.

The controller 5 may be included in the suction transport apparatus 100, or may be provided separate from the suction transport apparatus 100. For example, the controller 5 may communicate with the suction transport apparatus 100 and may transmit, to the suction transport apparatus 100, control signals for controlling the suction transport apparatus 100.

3. Operation Examples

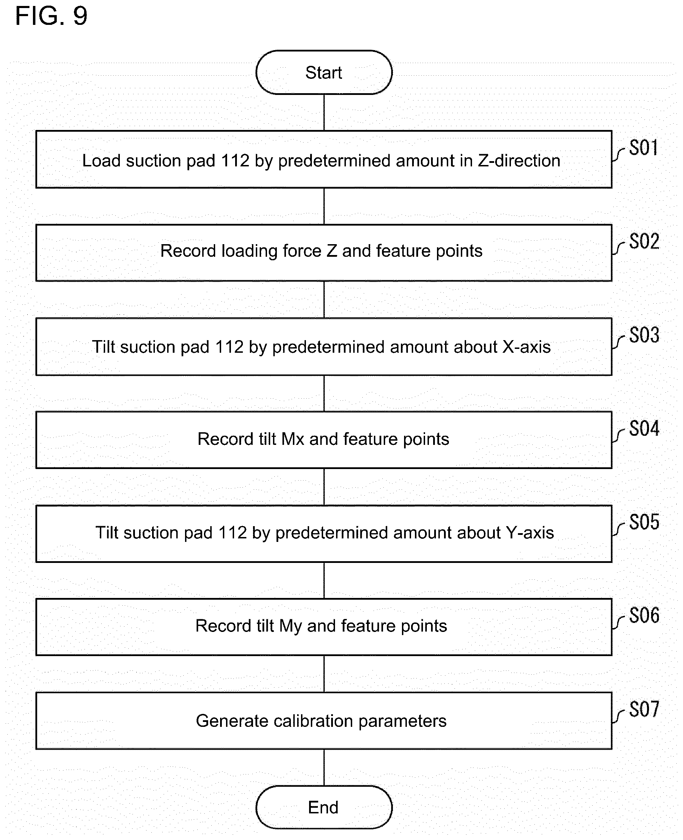

The processes performed in the present embodiment will now be described with reference to FIGs. 9 to 11.

Calibration Process

FIG. 9 is a flowchart of an example calibration process performed by the deformation measuring device according to the present embodiment.

In step S01, a human or a robot loads the suction pad 112 by a predetermined amount in Z-direction. In step S02, the loading force Z and the feature points resulting from the processing in step S01 are recorded.

In step S03, a human or a robot tilts the suction pad 112 by a predetermined amount about the X-axis. In step S04, the rotational amount (tilt) Mx indicating the tilting resulting from the processing in step S03 and the feature points are recorded.

In step S05, a human or a robot tilts the suction pad 112 by a predetermined amount about the Y-axis. In step S06, the rotational amount (tilt) My indicating the tilting resulting from the processing in step S05 and the feature points are recorded.

In step S07, calibration parameters are generated based on the recorded deformations (the loading force Z and the tilts Mx and My) and the recorded feature points. For example, the calibration parameters of the predictive model can be determined by adjusting the parameters for the predictive model to reduce the error between each recorded deformation and the corresponding data output from the predictive model in response to input displacement of the feature point obtained based on the reference coordinates and the feature point coordinates. For a predictive model as a white box model using a-priori information such as the mechanism of or the material for the suction pad 112, the calibration parameters can be determined through fitting that minimizes the squared error between a deformation output by the predictive model and a real deformation. For a predictive model as a black box model using a neural network or other approximation, the calibration parameters can be determined through backpropagation, in which the weights of the neural network are determined to minimize the error between a deformation output from the prediction model and a real deformation.

The deformations (the loading force Z and the tilts Mx and My) may be measured in any order.

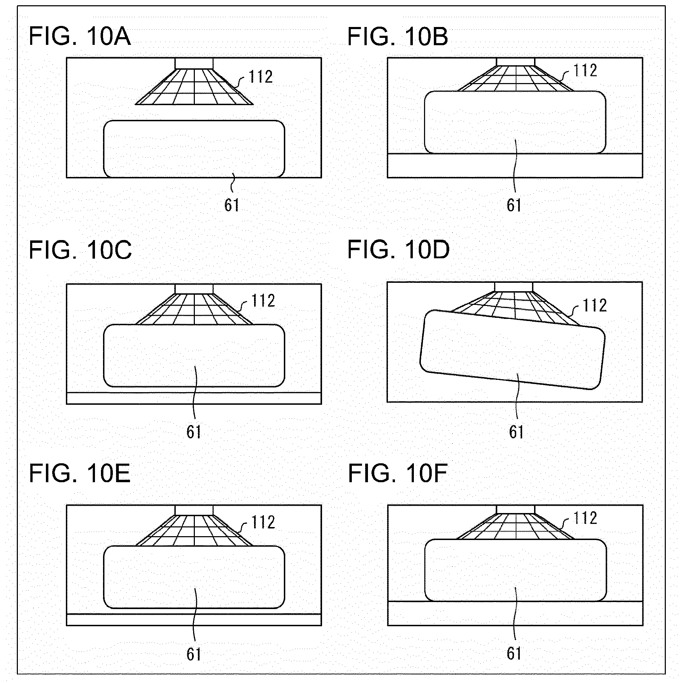

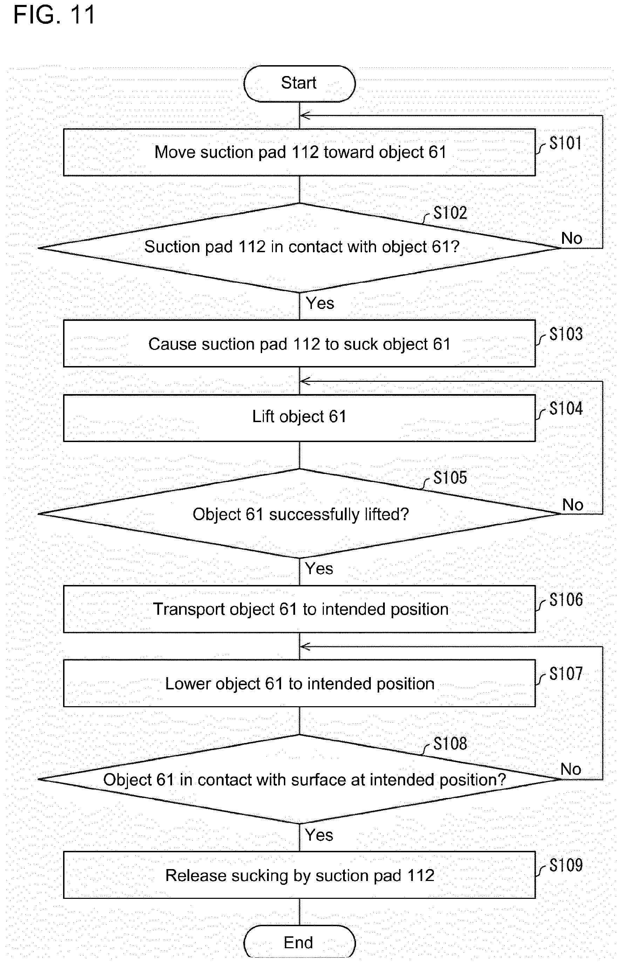

FIGs. 10A to 10F are schematic diagrams each showing an example process performed in the present embodiment. FIG. 11 is a flowchart of an example process performed in the present embodiment.

In step S101, the manipulator controller 13 controls the suction pad 112 to move toward the object 61 (workpiece W). FIG. 10A shows an example of step S101. In step S102, the manipulator controller 13 determines whether the suction pad 112 is in contact with the object 61. The manipulator controller 13 can determine whether the suction pad 112 is in contact with the object 61 based on a deformation of the deformable section 118 of the suction pad 112. The manipulator controller 13 determines that the suction pad 112 is in contact with the object 61 in response to the deformation greater than or equal to a threshold. In response to a determination that the suction pad 112 is in contact with the object 61 (Yes in step S102), the manipulator controller 13 controls the suction pad 112 to suck the object 61 (step S103). FIG. 10B shows an example of step S103. In response to a determination that the suction pad 112 is not in contact with the object 61 (No in step S102), the processing in steps S101 and S102 is repeated.

In step S104, the manipulator controller 13 controls the manipulator 111 to lift the object 61. FIG. 10C shows an example of step S104. In step S105, the manipulator controller 13 determines whether the object 61 has been lifted successfully. The manipulator controller 13 can determine whether the suction pad 112 has been lifted successfully based on a deformation of the deformable section 118 of the suction pad 112. The manipulator controller 13 determines that the object 61 has been lifted successfully in response to the deformation being constant below another threshold. In response to a determination that the object 61 has been lifted successfully (Yes in step S105), the object 61 is transported to an intended position (step S106). FIG. 10D shows an example of step S106. In response to a determination that the object 61 has not been lifted successfully (No in step S105), the processing in steps S104 and S105 is repeated.

In step S107, the manipulator controller 13 lowers the object 61 to the intended position. FIG. 10E shows an example of step S107. In step S108, the manipulator controller 13 determines whether the object 61 is in contact with a placement target surface at the intended position. The manipulator controller 13 can determine whether the object 61 is in contact with the surface at the intended position based on a deformation of the deformable section 118 of the suction pad 112. The manipulator controller 13 determines that the object 61 is in contact with the surface at the intended position in response to the deformation greater than or equal to another threshold. In response to a determination that the object 61 is in contact with the surface at the intended position (Yes in step S108), the manipulator controller 13 releases the sucking performed by the suction pad 112 (step S109). FIG. 10F shows an example of step S108 in which the determination result is affirmative. In response to a determination that the object 61 is not in contact with the surface at the intended position (No in step S108), the processing in steps S107 and S108 is repeated.

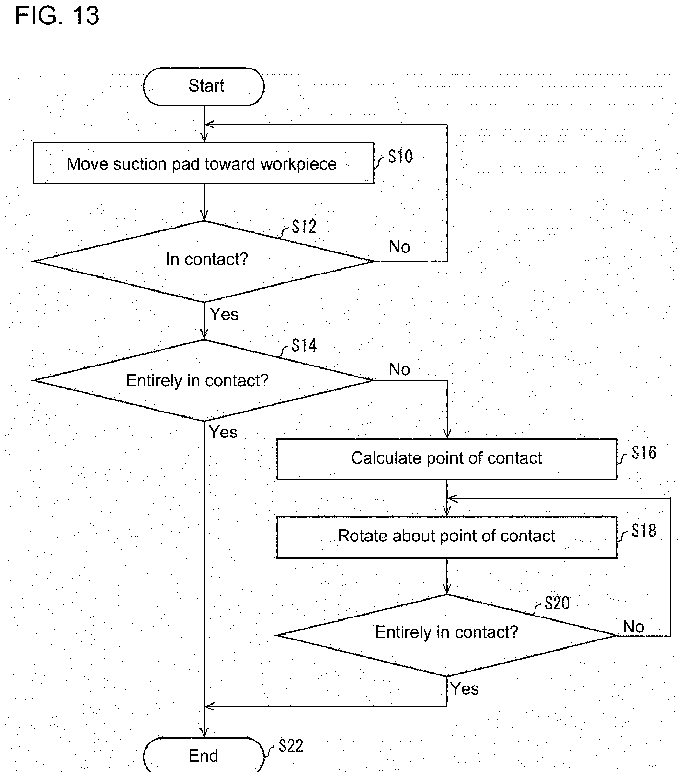

An operation performed by the suction transport apparatus 100 with the workpiece W (transport-target object W or object 61) including picking and placing the workpiece W will now be described with reference to FIGs. 13 to 15.

Operation Example 1

FIG. 13 is a flowchart showing the operation of the suction transport apparatus 100 according to one or more embodiments of the present invention. Referring to FIG. 13, an operation example performed when the suction pad 112 sucks and picks the workpiece W will be described first.

Step S10

In step S10, the operation controller 13 vertically lowers the suction pad 112 toward the workpiece W.

Step S12

In step S12, the operation controller 13 determines whether at least a part of the suction pad 112 is in contact with the workpiece W. The suction pad 112 in contact with the workpiece W tilts in X- and Y-directions, and has a tilt written using the absolute value of a vector (ex, ey) exceeding a threshold $\varepsilon 1$, or a loading force ez in Z-direction exceeding a threshold $\varepsilon 2$. In this state, the formula below holds.

$$|(ex, ey)| > \varepsilon 1 \text{ or } ez > \varepsilon 2$$

More specifically, the operation controller 13 determines that the suction pad 112 is in contact with the workpiece W when the above formula holds in this step, and determines that the suction pad 112 is not in contact with the workpiece W in any other cases.

When the operation controller 13 determines that the suction pad 112 is in contact with the workpiece W (Yes in step S12), the processing advances to step S14.

When the operation controller 13 determines that the suction pad 112 is not in contact with the workpiece W (No in step S12), the processing returns to step S10, in which the suction pad 112 is further moved toward the workpiece W.

Step S14

In step S14, the operation controller 13 determines whether the suction pad 112 is entirely in contact with the workpiece W. The suction pad 112 entirely in contact with the workpiece W has no tilting. The formula below holds.

$$|(ex, ey)| < \varepsilon 1$$

Thus, the operation controller 13 determines that the sucking surface of the suction pad 112 is entirely in contact with the workpiece W when the above formula holds in this step, and determines that the sucking surface of the suction pad 112 is not entirely in contact with the workpiece W in any other cases.

When the operation controller 13 determines that the sucking surface of the suction pad 112 is entirely in contact with the workpiece W (Yes in step S14), the control over the tilting of the suction pad 112 ends. The processing then advances to the control over the loading force (described below).

When the operation controller 13 determines that the sucking surface of the suction pad 112 is not entirely in contact with the workpiece W (No in step S14), the processing advances to step S16.

Step S16

In step S16, the contact point determiner 131 determines the position of a point of contact between the suction pad 112 and the workpiece W based on the deformation behavior of the suction pad 112.

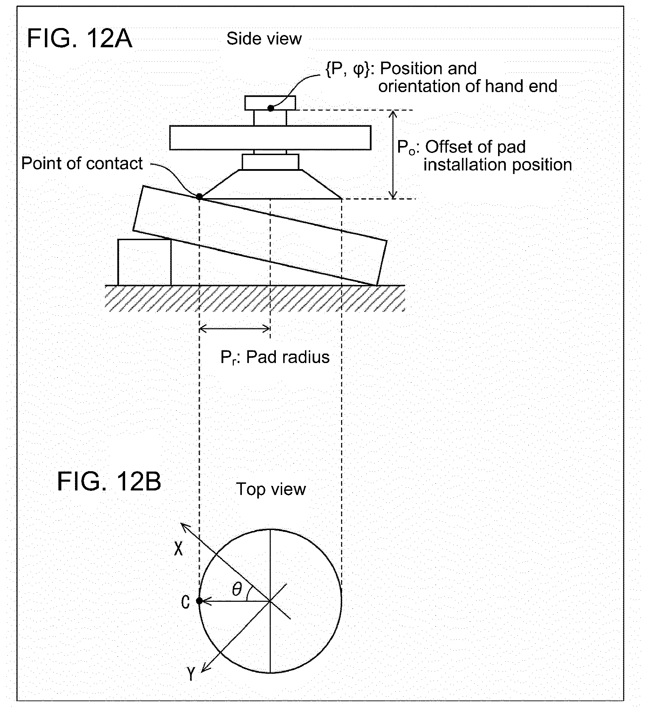

FIG. 12A is a side view of the suction pad 112. FIG. 12B is a top view of the suction pad 112. Referring now to FIGs. 12A and 12B, a process performed by the contact point determiner 131 for determining the position of a point of contact between the suction pad 112 and the workpiece W will be described. An angle θ is calculated using the formula below, where θ is the angle formed by the tilting (vector N) of the suction pad 112 projected onto an XY plane with the X-axis.

$$\theta = \arctan(ey/ex)$$

The contact point determiner 131 determines a point of contact between the suction pad 112 and the workpiece W based on the angle θ.

After the point of contact is determined, the processing advances to step S18.

Step S18

In step S18, the operation controller 13 changes the tilting of the suction pad 112 while maintaining the contact between the suction pad 112 and the workpiece W at the determined point of contact. More specifically, the operation controller 13 changes the tilting of the suction pad 112 to have a smaller angle between the sucking surface of the suction pad 112 and the surface of the workpiece W to be sucked. The operation controller 13 performs the process below to generate an operation command for the manipulator 111 to change the tilting of the suction pad 112 to align the sucking surface with the surface of the workpiece W to be sucked, while maintaining the contact at the point of contact.

The suction pad 112 is attachable to and detachable from the robotic arm. The operation controller 13 calculates a command speed (Pv) and a command angular speed (φω) for controlling the position and the angle (orientation) of the transport hand end at the root of the suction pad 112 in the form of a combination (simple sum) of the two command values below. The command angular speed (φω) is the rate of change of the angle of the transport hand end.

1. Command speed Pv (more specifically, command speed vector) for maintaining contact between the suction pad 112 and the workpiece W at the point of contact

$$Pv = (Pvr - Gv \cdot ez)h$$

where Pvr is the target movement speed of the suction pad 112, Gv is the constant gain, ez is the Z-axis component of the normal vector R representing the tilting of the suction pad 112, and h is the direction vector of the hand end orientation ($\varphi$). The center dot represents multiplication.

2. Command speed (Pv) and command angular speed ($\varphi\omega$) for rotating the suction pad 112 about the point of contact

The point of contact is used as an extension of the hand end. The position and the orientation of the point of contact are then {Pe, $\varphi$e}. In step S18, the values ex and ey are small, and thus $\varphi$e = $\varphi$. The formula for {Pe, $\varphi$e} is given below, where Po is the pad installation position offset and Pr is the radius of the pad in FIGs. 12A and 12B, $\theta$ is the angle calculated in step S16, and {P, $\varphi$} is the original position and orientation of the hand end.

$$\{Pe, \varphi e\} = FK(\{P, \varphi\}, \{P_o, Pr, \theta\})$$

In this formula, Pe is the center of rotation, $P_o$ is the offset of the suction pad installation position (the distance between the center of the sucking surface of the suction pad 112 and the hand end position of the transport apparatus), and Pr is the radius of the suction pad 112. Further, FK is the kinematic function to return {Pe, $\Phi$e} from {P, $\Phi$}. The kinematic function FK has the corresponding inverse kinematic function IK, which is written as follows.

$$\{P, \varphi\} = IK(\{Pe, \varphi e\}, \{P_o, Pr, \theta\})$$

When a command {Pev, $\varphi$ev} is generated for providing a rotation on a plane including the central axis of the suction pad 112 using the center of rotation Pe, the operation controller 13 determines the function {Pv, $\varphi\omega$} using the function IK or the Jacobian matrix derived from the function IK. This combination is used as the command speed and the command angular speed.

The operation controller 13 changes the tilting of the suction pad 112 in accordance with the command speed calculated as described above. The processing then advances to step S20.

Step S20

In step S20, the operation controller 13 determines whether the suction pad 112 is entirely in contact with the workpiece W. More specifically, the operation controller 13 performs the determination through the same processing as in step S14 described above. When the operation controller 13 determines that the sucking surface of the suction pad 112 is entirely in contact with the workpiece W (Yes in step S20), the control over the tilting of the suction pad 112 ends. The processing then advances to the control over the loading force. When the operation controller 13 determines that the sucking surface of the suction pad 112 is not entirely in contact with the workpiece W (No in step S20), the processing returns to step S18 to continue the control over the tilting of the suction pad 112.

Through the operation example described above, the operation controller 13 determines the position of the point of contact and the tilting of the suction pad 112 after the suction pad 112 is in contact with the workpiece W, and changes the tilting of the suction pad 112 to cause the suction pad 112 to be in full contact with the surface of the workpiece W to be sucked, while maintaining the contact at the point of contact. The orientation of the suction pad 112 can thus be corrected precisely to allow reliable picking of the workpiece W. Operation Example 2

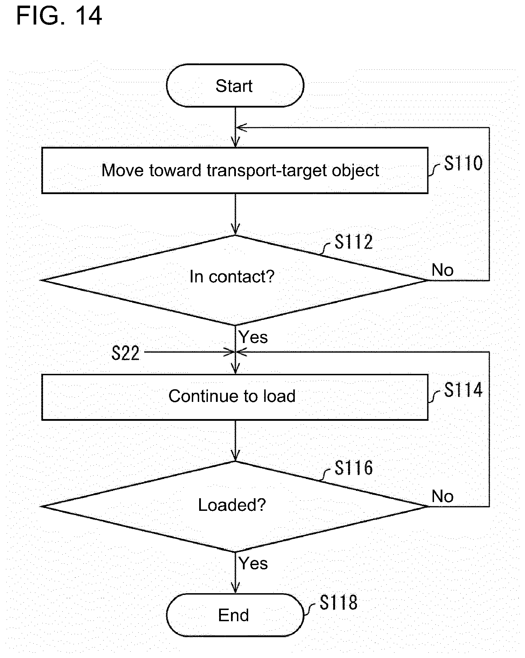

FIG. 14 is a flowchart of an operation of the deformation measuring device according to another embodiment of the present invention. Referring now to FIG. 14, an operation example of the suction pad 112 for loading the workpiece W before the object is sucked or placed will be described.

Step S110

In step S110, the operation controller 13 vertically lowers the suction pad 112 toward the workpiece W.

Step S112

In step S112, the operation controller 13 determines whether the suction pad 112 is in contact with the workpiece W based on a deformation of the suction pad 112.

When the operation controller 13 determines that the suction pad 112 is in contact with the workpiece W based on the deformation of the suction pad 112 (Yes in step S112), the processing advances to step S114. When the operation controller 13 determines that the suction pad 112 is not in contact with the workpiece W based on the deformation of the suction pad 112 (No in step S112), the processing returns to step S110, in which the suction pad 112 is further moved toward the workpiece W.

Step S114

In step S114, the operation controller 13 continues to load the suction pad 112 toward the workpiece W. The operation controller 13 may change the movement speed of the suction pad 112 in accordance with the deformation behavior of the suction pad 112. For example, the operation controller 13 may reduce the speed of moving the suction pad 112 toward the workpiece W when the deformation of the suction pad 112 (the loading force ez) exceeds a first threshold. More specifically, the operation controller 13 may reduce the movement speed of the suction pad 112 in step S114 to below the movement speed of the suction pad 112 in step S 110. The processing then advances to step S116.

Step S116

In step S116, the operation controller 13 determines whether the suction pad 112 is loaded against the workpiece W. In this step, the operation controller 13 determines that the loading force is sufficient when the formula below holds, where $\varepsilon 2$ is the threshold for the loading force ez of the workpiece W against the suction pad 112. The operation controller 13 determines that the loading force is not sufficient in any other cases.

$$ez > \varepsilon 2$$

When determining that the suction pad 112 has been loaded sufficiently against the workpiece W (Yes in step S116), the operation controller 13 stops moving the suction pad 112. For example, the operation controller 13 may stop the operation of moving the suction pad 112 toward the workpiece W when the deformation of the suction pad 112 exceeds a second threshold greater than the first threshold.

When the control over the loading force ends, the deformation information obtainer 113 turns on the vacuum pump 12 to start sucking the object. When the manipulator controller 13 determines that the suction pad 112 has not been sufficiently loaded against the workpiece W (No in step S116), the processing returns to step S114, in which the loading operation is performed continuously.

Through the operation example described above, the deformation information obtainer 113 determines whether to continue or stop the loading operation by monitoring the loading force of the suction pad 112 against the workpiece W based on the deformation of the suction pad 112. This control allows the loading force ez of the suction pad 112 against the workpiece W within a predetermined range to allow loading of the workpiece W in picking or placing the workpiece W.

Operation Example 3

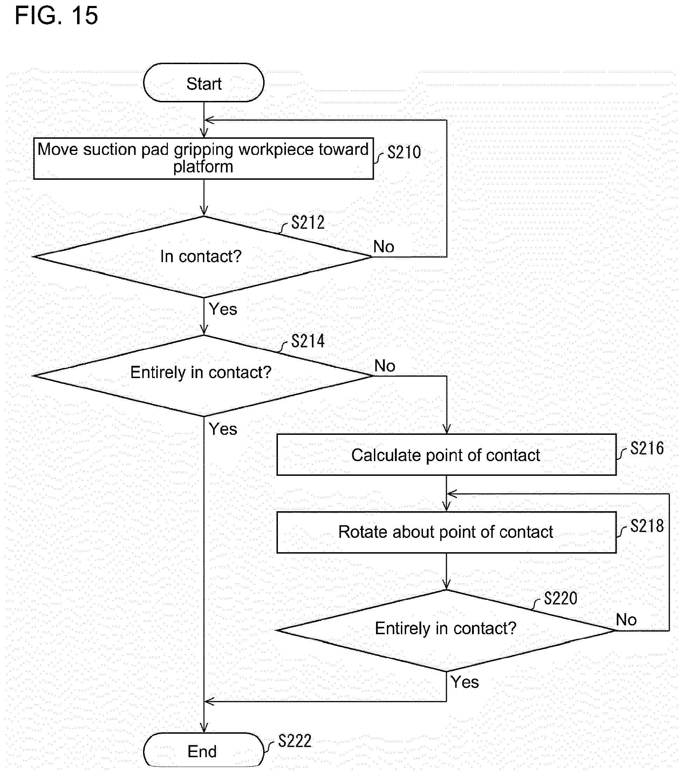

Referring now to FIG. 15, an operation example for placing the workpiece W onto the platform performed by the suction pad 112 gripping the workpiece W will be described.

Step S210

In step S210, the operation controller 13 vertically lowers the suction pad 112 (workpiece W) toward the platform.

Step S212

In step S212, the operation controller 13 determines whether at least a part of the workpiece W gripped by the suction pad 112 is in contact with the platform at the point of contact. The operation controller 13 performs basically the same processing as in step S12 described in Operation Example 1 above. With the sucking and the weight of the workpiece W, the deformation {ex0, ey0, ez0} of the suction pad 112 before the workpiece W is in contact with the platform is not zero in this operation. The operation controller 13 records the deformation {ex0, ey0, ez0} before the workpiece W is in contact with the platform. More specifically, the operation controller 13 determines that the workpiece W gripped by the suction pad 112 is in contact with the platform when the formula below holds, and determines that the workpiece W is not in contact with the platform in any other cases.

$$|\,(ex - ex0,\ ey - ey0)\,|\ > \varepsilon4\ \text{or}\ |\,(ez - ez0\,|\ > \varepsilon5$$

When the operation controller 13 determines that a part of the workpiece W (a surface not to be sucked) is in contact with the platform (Yes in step S212), the processing advances to step S214. When the operation controller 13 determines that a part of the workpiece W is not in contact with the platform (No in step S212), the processing returns to step S210, in which the workpiece W is further moved toward the platform.

Step S214

In step S214, the operation controller 13 determines whether the lower surface of the workpiece W is entirely in contact with the platform. When the lower surface of the workpiece W is entirely in contact with the platform, the suction pad 112 and the workpiece W each have no tilting. The formula below holds.

$$|\,(ex - ex0,\ ey - ey0)\,|\ < \varepsilon4$$

Thus, the operation controller 13 determines that the lower surface of the workpiece W is entirely in contact with the platform when the above formula holds, and determines that the lower surface of the workpiece W is not entirely in contact with the platform in any other cases.
When determining that the lower surface of the workpiece W is entirely in contact with the platform (Yes in step S214), the operation controller 13 ends the control over the tilting of the suction pad 112. The processing then advances to the control over the loading force described above. When the operation controller 13 determines that the workpiece W is not entirely in contact with the platform (No in step S214), the processing advances to step S216.

Step S216

In step S216, the contact point determiner 131 determines the position of a point of contact between the workpiece W and the placement target surface of the platform on which the workpiece W is to be placed based on the deformation behavior of the suction pad 112. The deformation information obtainer 113 performs basically the same processing as in step S16 in Operation Example 1. The calculation is performed with the formula below using the recorded offset {ex0, ey0, ez0}.

$$\theta = \arctan((ey - ey0)/(ex - ex0))$$

After the point of contact between the workpiece W and the placement target surface of the platform on which the workpiece W is to be placed is determined, the processing advances to step S218.

Step S218

In step S218, the operation controller 13 changes the tilting of the suction pad 112 while maintaining the contact between the workpiece W and the placement target surface of the platform at the determined point of contact (along the contact side). The operation controller 13 changes the tilting of the suction pad 112 to have a smaller angle between the surface of the suction pad 112 not to be sucked and the placement target surface of the platform.
The operation controller 13 performs basically the same processing as in step S18 described in Operation Example 1 above to calculate the command speed for changing the tilting of the workpiece W to align the sucking surface of the suction pad 112 with the surface of the platform while maintaining the contact at the point of contact.
The operation controller 13 performs the calculation with the formula below using the recorded offset {ex0, ey0, ez0}, with the terms being changed in the manner described below.
The term ez is replaced with ez - ez0.
For the term {Pe, $\varphi$e}, the point of contact between the suction pad 112 and the workpiece W is replaced with the point of contact between the workpiece W and the platform.
The term {FK({P, $\varphi$}, {$P_o$, Pr, $\theta$}) is replaced with {FK({P, $\varphi$}, {$P_o$ + Wh/2, Pr + Wl/2, $\theta$}).
In the above formula, Wh is the height of the workpiece W, W1 is the length of the workpiece W, and FK is the same kinematic function as FK in step S18 in Operation Example 1.
Thus, the term
{P, $\varphi$} = IK({Pe, $\varphi$e}, {$P_o$, Pr, $\theta$}) is replaced with {P, $\varphi$} = IK({Pe, $\varphi$e}, {$P_o$ + Wh/2, Pr + Wl/2, $\theta$}).

In the above formula as well, IK is the same kinematic function as IK in step S18 in Operation Example 1.

Through the processing described above, the operation controller 13 changes the tilting of the suction pad 112 in accordance with the command speed calculated as described above. The processing then advances to step S220.

Step S220

In step S220, the operation controller 13 determines whether the surface of the workpiece W that is not the surface to be sucked is entirely in contact with the placement target surface of the platform. The operation controller 13 performs the same processing as in step S214 above.

When determining that the surface of the workpiece W that is not the surface to be sucked is entirely in contact with the placement target surface of the platform (Yes in step S220), the operation controller 13 ends the control over the tilting of the suction pad 112, and stops the sucking operation and releases the workpiece. When the operation controller 13 determines that the surface of the workpiece W that is not the surface to be sucked is not entirely in contact with the placement target surface of the platform (No in step S220), the processing returns to step S218 to continue the control over the tilting.

Through the operation example described above, the operation controller 13 determines the position of the point of contact and the tilting of the suction pad 112 after the surface of the workpiece W that is not the surface to be sucked is in contact with the placement target surface of the platform, and changes the tilting of the suction pad 112 to cause the surface of the workpiece W that is not the surface to be sucked to be entirely in contact with the placement target surface of the platform, while maintaining the contact at the point of contact. The orientation of the suction pad 112 can thus be corrected precisely to allow placement of the workpiece W onto an accurate position. This structure also prevents the released workpiece W from receiving impact or the released workpiece W from falling.

4. Modifications

The embodiments of the present invention described in detail above are mere examples of the present invention in all respects. The embodiments may be variously modified or altered without departing from the scope of the present invention. For example, the embodiments may be modified in the following forms. The same components as those in the above embodiments are hereafter given the same numerals, and the operations that are the same as those in the above embodiments will not be described. The modifications described below may be combined as appropriate.

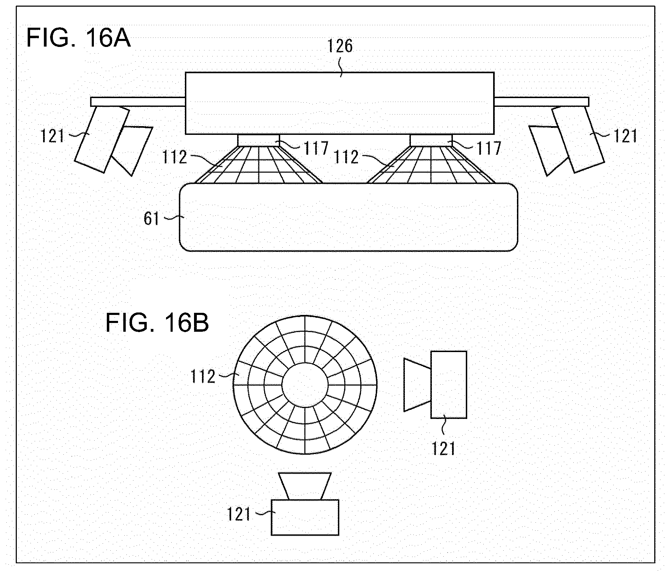

The structure of a deformation measuring device according to each of modifications will be described with reference to FIGs. 16A to 18.

First Modification

FIG. 16A is a partially enlarged view of a deformation measuring device 1 according to a first modification of the present embodiment showing an example structure. In the example of FIG. 16A, the deformation measuring device 1 includes two suction pads 112. Each suction pad 112 includes a stationary section 117 fixed to a support 126. Such multiple suction pads 112 can grip a larger object 61 with a sufficiently large sucking force.

Second Modification

FIG. 16B is a partially enlarged view of a deformation measuring device 1 according to a second modification of the present embodiment showing an example structure. In the example of FIG. 16B, the deformation measuring device 1 includes two imaging devices 121. Such multiple imaging devices 121 allow measurement of the deformation of the entire deformable section 118 of the suction pad 112 to accurately determine the directions in which the suction pad 112 tilts with respect to the X-axis and the Y-axis. This structure allows more precise detection of whether the suction pad 112 is in contact with the object. Third Modification

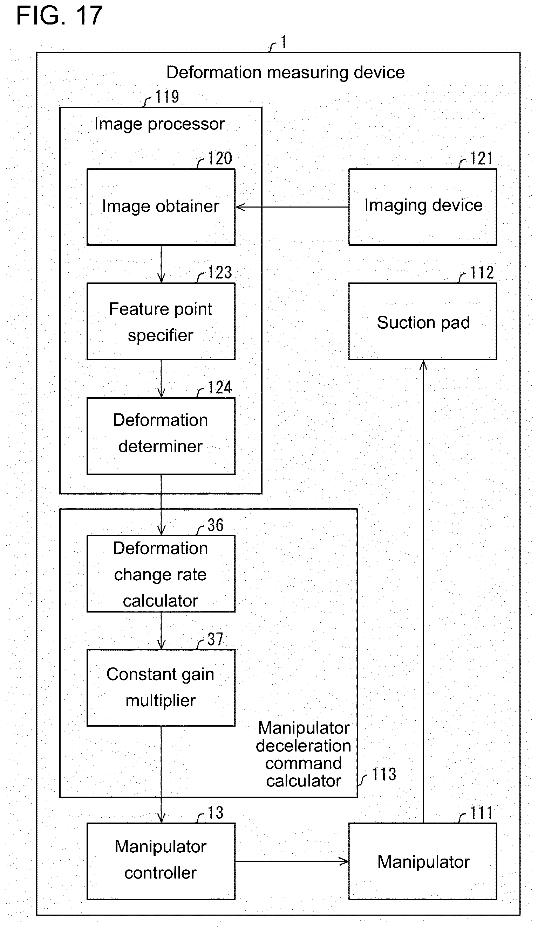

FIG. 17 is a schematic block diagram of a deformation measuring device according to a third modification of the present embodiment. In the example of FIG. 17, a deformation measuring device 1 includes a manipulator deceleration command calculator (deformation information obtainer) 113. The manipulator deceleration command calculator 113 includes a deformation change rate calculator 36 and a constant gain multiplier 37. The deformation change rate calculator 36 may be included in the image processor 119, instead of the manipulator deceleration command calculator 113.

The deformation change rate calculator 36 calculates a deformation change rate by calculating a time integral of the deformation determined by the deformation determiner 124. The deformation change rate calculator 36 outputs the deformation change rate to the constant gain multiplier 37.

The constant gain multiplier 37 calculates a deceleration value by multiplying, by a constant, the deformation change rate (e.g., the angular speed of the sucking surface of the suction pad) calculated by the deformation change rate calculator 36. The constant gain multiplier 37 outputs the deceleration value to the manipulator controller 13.

The manipulator controller (operation controller) 13 has a target movement speed for the suction pad 112 to transport an object. The manipulator controller 13 obtains the command speed by subtracting the deceleration value from the target movement speed. The manipulator controller 13 controls the manipulator 111 to move the hand end (suction pad 112) of the manipulator at the command speed. The speed for moving the hand end of the robotic arm is changed to lower the deformation change rate of the suction pad 112 to dampen vibrations of the suction pad 112 (vibrations of the object).

Similarly, the manipulator controller 13 may change the tilting of the suction pad 112 to decrease the deformation change rate based on the deformation change rate. The tilting of the suction pad 112 is changed to dampen vibrations of the suction pad 112. The tilting of the suction pad 112 is used in such vibration damping to minimize the time for positioning when the transportation is stopped, and also to shorten the processing time for transportation (takt time in transportation).

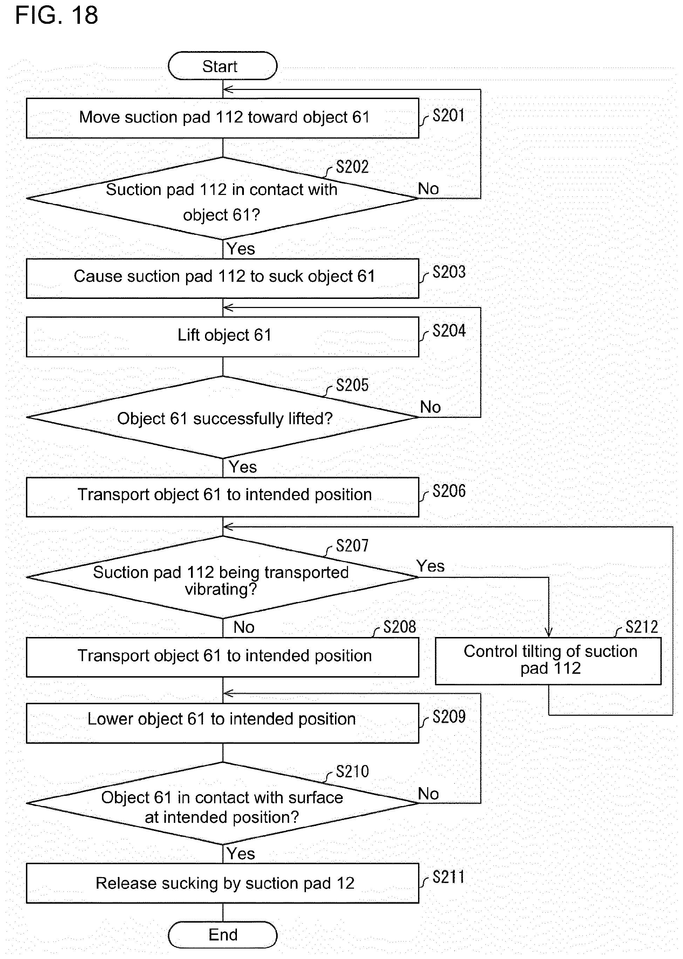

FIG. 18 is a flowchart of an example process performed by the deformation measuring device according to the third modification of the present embodiment.

In step S201, the manipulator controller 13 controls the suction pad 112 to move toward the object 61. FIG. 10A shows an example of step S201. In step S202, the manipulator controller 13 determines whether the suction pad 112 is in contact with the object 61. The manipulator controller 13 can determine whether the suction pad 112 is in contact with the object 61 based on a deformation of the deformable section 118 of the suction pad 112. The manipulator controller 13 determines that the suction pad 112 is in contact with the object 61 in response to the deformation greater than or equal to a threshold. In response to a determination that the suction pad 112 is in contact with the object 61 (Yes in step S202), the manipulator controller 13 controls the suction pad 112 to suck the object 61 (step S203). FIG. 10B shows an example of step S203. In response to a determination that the suction pad 112 is not in contact with the object 61 (No in step S202), the processing in steps S201 and S202 is repeated.

In step S204, the manipulator controller 13 controls the manipulator 111 to lift the object 61. FIG. 10C shows an example of step S204. In step S205, the manipulator controller 13 determines whether the object 61 has been lifted successfully. The manipulator controller 13 can determine whether the suction pad 112 has been lifted successfully based on a deformation of the deformable section 118 of the suction pad 112. The manipulator controller 13 determines that the object 61 has been lifted successfully in response to the deformation greater than or equal to another threshold. In response to a determination that the object 61 has been lifted successfully (Yes in step S205), the object 61 is transported to an intended position (step S206). FIG. 10D shows an example of step S206. In response to a determination that the object 61 has not been lifted successfully (No in step S205), the processing in steps S204 and S205 is repeated.

In step S207, the manipulator controller 13 determines whether the suction pad 112 being transported is vibrating. The manipulator controller 13 determines that the suction pad 112 being transported is vibrating in response to the deformation change rate of the suction pad 112 being greater than or equal to another threshold. When determining that the suction pad 112 being transported is not vibrating (No in step S207), the manipulator controller 13 transports the object 61 to an intended position without changing the tilting of the object 61 (step S208). In response to a determination that the suction pad 112 being transported is vibrating (Yes in step S207), the manipulator controller 13 controls the tilting of the suction pad 112 (step S212). The processing in step S207 is then repeated.

In step S209, the manipulator controller 13 controls the manipulator 111 to lower the object 61 to the intended position. FIG. 10E shows an example of step S209. In step S210, the manipulator controller 13 determines whether the object 61 is in contact with a placement target surface at the intended position. The manipulator controller 13 can determine whether the object 61 is in contact with the surface at the intended position based on a deformation of the deformable section 118 of the suction pad 112. The manipulator controller 13 determines that the object 61 is in contact with the surface at the intended position in response to the deformation greater than or equal to another threshold. In response to a determination that the object 61 is in contact with the surface at the intended position (Yes in step S210), the manipulator controller 13 releases the sucking performed by the suction pad 112 (step S211). FIG. 10F shows an example of step S210 in which the determination result is affirmative. In response to a determination that the object 61 is not in contact with the surface at the intended position (No in step S210), the processing in steps S209 and S210 is repeated.

Implementations Using Software

The control blocks of the deformation measuring device 1 (in particular, the image processor 119, the image obtainer 120, the feature point specifier 123, the deformation determiner 124, the manipulator controller 13, the manipulator deceleration command calculator 113, the deformation change rate calculator 36, and the constant gain multiplier 37) may be implemented by, for example, a logic circuit (hardware) in an integrated circuit (IC chip) or by software.

When using software for implementing these control blocks, the deformation measuring device 1 includes a computer for executing instructions included in a software program for implementing the functions of the control blocks.

**EP 3 970 927 B1**

The computer includes, for example, one or more processors and a computer-readable recording medium storing the program. The processors in the computer read the program from the recording medium and execute the program to achieve the aspects of the present invention. The processors are, for example, CPUs. The recording medium may be a non-transitory tangible medium, such as a ROM, a tape medium, a disk, a card, a semiconductor memory, or a programmable logic circuit. The computer may additionally include a RAM for expanding the program. The program may be provided through any transmission medium (such as a communication network or broadcast waves) that can transmit the program to the computer. One aspect of the present invention may be a data signal superimposed on carrier waves representing the program through electronic transmission.

The technical features described in different embodiments may be combined .

REFERENCE SIGNS LIST

1 deformation measuring device
2 transporter
3 battery
5 controller
11 robotic arm
12 vacuum pump
13 manipulator controller (operation controller)
14 object information obtainer
15 placement information obtainer
21 negative pressure controller
22 unmanned carrier
36 deformation change rate calculator
37 constant gain multiplier
61, W object (workpiece)
100 suction transport apparatus
111 manipulator
112 suction pad
113 manipulator deceleration command calculator
115 abnormality determiner
117 stationary section
118 deformable section
119 image processor
120 image obtainer
121 imaging device
123 feature point specifier
124 deformation determiner
126 support
131 contact point determiner
151 lattice pattern
152 to 155 circular mark
211 analogue signal output unit
221 transport controller

**Claims**

1. A suction pad (112) for sucking an object (61, W) under a negative pressure, the suction pad (112) comprising:

    a stationary section (117) fixable on a support (126) ; and
    a deformable section (118) deformable under the negative pressure, the deformable section (118) including a plurality of marks (151 to 155) at a plurality of positions spaced from one another and displaceable with respect to the stationary section (117) in response to deformation of the deformable section (118), the plurality of marks (151 to 155) being optically identifiable, the plurality of marks (151 to 155) being continuous across the plurality of positions or being separate at the plurality of positions

**characterized in that**
the marks (151 to 155) are formed from a retroreflective material.

2. The suction (112) pad according to claim 1, wherein
   the plurality of marks (151 to 155) include a lattice pattern (151).

3. The suction pad (112) according to claim 1, wherein
   the plurality of marks (151 to 155) include a plurality of markers (152 to 155) at the plurality of positions on the deformable section (118) viewable from one viewpoint.

4. The suction pad (112) according to claim 1, wherein
   the plurality of marks (151 to 155) include a plurality of markers (152 to 155) at three or more positions spaced from one another on the deformable section (118) as viewed in a lateral direction of the suction pad (112).

5. The suction pad (112) according to any one of claims 1 to 4, wherein
   the plurality of marks (151 to 155) are adjacent to a part of the deformable section (118) to be in contact with the object (61. W).

6. The suction pad (112) according to any one of claims 1 to 5, wherein
   the deformable section (118) has a bellows shape.

7. A deformation measuring device (1), comprising:

   the suction pad (112) according to any one of claims 1 to 6;
   an image obtainer (120) configured to obtain image data by capturing an image of the deformable section (118);
   a feature point specifier (123) configured to specify, based on the plurality of marks (151 to 155) included in the image data, a plurality of feature points included in the image data corresponding to the plurality of positions on the deformable section (118); and
   a deformation determiner (124) configured to determine a deformation at each of the plurality of positions on the deformable section (118) based on the plurality of feature points.

8. The deformation measuring device (1) according to claim 7, further comprising:
   an imaging device (121) installable lateral to the suction pad (112), the imaging device (121) being configured to capture an image of the deformable section (118).

## Patentansprüche

1. Saugpad (112) zum Ansaugen eines Objekts (61, W) mit einem Unterdruck, wobei das Saugpad (112) Folgendes aufweist:

   einen stationären Abschnitt (117), der an einem Träger (126) befestigbar ist; und
   einen verformbaren Abschnitt (118), der unter dem Unterdruck verformbar ist, wobei der verformbare Abschnitt (118) mehrere Markierungen (151 bis 155) an mehreren Positionen aufweist, die voneinander beabstandet sind und in Bezug auf den stationären Abschnitt (117) in Reaktion auf eine Verformung des verformbaren Abschnitts (118) verschiebbar sind, wobei die mehreren Markierungen (151 bis 155) optisch identifizierbar sind, wobei die mehreren Markierungen (151 bis 155) über die mehreren Positionen durchgehend sind oder an den mehreren Positionen getrennt vorgesehen sind,
   **dadurch gekennzeichnet, dass**
   die Markierungen (151 bis 155) aus einem retroreflektierenden Material gebildet sind.

2. Saugpad (112) nach Anspruch 1, wobei
   die mehreren Markierungen (151 bis 155) ein Gittermuster (151) aufweisen.

3. Saugpad (112) nach Anspruch 1, wobei
   die mehreren Markierungen (151 bis 155) mehrere Markierungen (152 bis 155) an den mehreren Positionen auf dem verformbaren Abschnitt (118) aufweisen, die von einem Blickpunkt aus sichtbar sind.

**EP 3 970 927 B1**

4. Saugpad (112) nach Anspruch 1, wobei
die mehreren Markierungen (151 bis 155) mehrere Markierungen (152 bis 155) an drei oder mehr Positionen aufweisen, die auf dem verformbaren Abschnitt (118) in einer seitlichen Richtung des Saugpads (112) gesehen voneinander beabstandet sind.

5. Saugpad (112) nach einem der Ansprüche 1 bis 4, wobei
die mehreren Markierungen (151 bis 155) an einen Teil des verformbaren Abschnitts (118) angrenzen, um mit dem Objekt (61, W) in Kontakt zu sein.

6. Saugpad (112) nach einem der Ansprüche 1 bis 5, wobei der verformbare Abschnitt (118) eine Balgform aufweist.

7. Verformungsmessvorrichtung (1), die Folgendes aufweist:

eine Bilderfassungseinrichtung (120), die eingerichtet ist, Bilddaten durch Aufnehmen eines Bilds des verformbaren Abschnitts (118) zu erfassen;
eine Merkmalspunktspezifizierungseinrichtung (123), die eingerichtet ist, basierend auf den mehreren Markierungen (151 bis 155), die in den Bilddaten enthalten sind, mehrere Merkmalspunkte zu spezifizieren, die in den Bilddaten enthalten sind, die den mehreren Positionen auf dem verformbaren Abschnitt (118) entsprechen; und
eine Verformungsbestimmungseinrichtung (124), die eingerichtet ist, eine Verformung an jeder der mehreren Positionen auf dem verformbaren Abschnitt (118) basierend auf den mehreren Merkmalspunkten zu bestimmen.

8. Verformungsmessvorrichtung (1) nach Anspruch 7, die ferner Folgendes aufweist:
eine Bildgebungsvorrichtung (121), die seitlich zu dem Saugpad (112) installiert werden kann, wobei die Bildgebungsvorrichtung (121) eingerichtet ist, ein Bild des verformbaren Abschnitts (118) aufzunehmen.

**Revendications**

1. Ventouse (112) pour aspirer un objet (61, W) sous une pression négative, la ventouse (112) comprenant :

une section fixe (117) pouvant être fixée sur un support (126) ; et
une section déformable (118) déformable sous la pression négative, la section déformable (118) comprenant une pluralité de marques (151 à 155) à une pluralité de positions espacées les unes des autres et déplaçables par rapport à la section fixe (117) en réponse à la déformation de la section déformable (118), la pluralité de marques (151 à 155) étant optiquement identifiables, la pluralité de marques (151 à 155) étant continues à travers la pluralité de positions ou étant séparées à la pluralité de positions
**caractérisée en ce que**
les marques (151 à 155) sont formées à partir d'un matériau rétroréfléchissant.

2. Plaquette d'aspiration (112) selon la revendication 1, dans laquelle
la pluralité de marques (151 à 155) comprennent un motif en treillis (151).

3. Plaquette d'aspiration (112) selon la revendication 1, dans laquelle
la pluralité de marques (151 à 155) comprennent une pluralité de marqueurs (152 à 155) à la pluralité de positions sur la section déformable (118) visibles depuis un point de vue.

4. Plaquette d'aspiration (112) selon la revendication 1, dans laquelle
la pluralité de marques (151 à 155) comprennent une pluralité de marqueurs (152 à 155) à trois positions ou plus espacées les unes des autres sur la section déformable (118) telles que vues dans une direction latérale de la plaquette d'aspiration (112).

5. Plaquette d'aspiration (112) selon l'une quelconque des revendications 1 à 4, dans laquelle
la pluralité de marques (151 à 155) sont adjacentes à une partie de la section déformable (118) pour être en contact avec l'objet (61, W).

6. Plaquette d'aspiration (112) selon l'une quelconque des revendications 1 à 5, dans laquelle
la section déformable (118) a une forme de soufflet.

**7.** Dispositif de mesure de déformation (1), comprenant :

la plaquette d'aspiration (112) selon l'une quelconque des revendications 1 à 6 ;
un dispositif d'obtention d'image (120) configuré pour obtenir des données d'image en capturant une image de la section déformable (118) ;
un dispositif de spécification de point caractéristique (123) configuré pour spécifier, sur la base de la pluralité de marques (151 à 155) incluses dans les données d'image, une pluralité de points caractéristiques inclus dans les données d'image correspondant à la pluralité de positions sur la section déformable (118) ; et
un dispositif de détermination de déformation (124) configuré pour déterminer une déformation à chacune de la pluralité de positions sur la section déformable (118) sur la base de la pluralité de points caractéristiques.

**8.** Dispositif de mesure de déformation (1) selon la revendication 7, comprenant en outre :
un dispositif d'imagerie (121) pouvant être installé latéralement à la plaquette d'aspiration (112), le dispositif d'imagerie (121) étant configuré pour capturer une image de la section déformable (118).

FIG. 1A

117

118

112

151

FIG. 1B

117

118

112

151

FIG. 1C

117

118

112

152    152    152

FIG. 1D

117

118

112

151

FIG. 2A

Z-axis
Y-axis
Mx
My
X-axis
112
Z

Z: Loading force
Mx, My: Tilting

FIG. 2B

Z-axis
Y-axis
X-axis

N        P

FIG. 3A

117
112
118
152

FIG. 3B

117
112
118
152    152

FIG. 3C

117
112
118
151

FIG. 3D

117
112
118
152    152    152

FIG. 4A

FIG. 4B

FIG. 4C

FIG. 4D

FIG. 4E

FIG. 4F

FIG. 4G

FIG. 4H

FIG. 5A

FIG. 5B

## FIG. 6

FIG. 7A

FIG. 7B

FIG. 7C

Point 1: {025, 110},
Point 2: {025, 150},
Point 3: {025, 190},
Point 4: {060, 080},
Point 5: {060, 150},
Point 6: {060, 220}

# FIG. 8A

**Suction transport apparatus** ⌐100

**Deformation measuring device** ⌐1

**Robotic arm** ⌐11

Torsion sensor ⌐114

5 ⌐

**Controller**

Deformation information obtainer ⌐113

Abnormality determiner ⌐115

Suction section (suction pad) ⌐112

Manipulator ⌐111

Vacuum pump ⌐12

Operation controller ⌐13

**Transporter** ⌐2

Negative pressure controller ⌐21

Analogue signal output unit ⌐211

Unmanned carrier ⌐22

Transport controller ⌐221

Battery ⌐3

# FIG. 8B

**Controller** ⌐5

Deformation information obtainer ⌐113

Operation controller ⌐13

Contact point determiner ⌐131

Negative pressure controller ⌐21

Object information obtainer ⌐14

Placement information obtainer ⌐15

## FIG. 9

```
Start
```

Load suction pad 112 by predetermined amount in Z-direction — S01

Record loading force Z and feature points — S02

Tilt suction pad 112 by predetermined amount about X-axis — S03

Record tilt Mx and feature points — S04

Tilt suction pad 112 by predetermined amount about Y-axis — S05

Record tilt My and feature points — S06

Generate calibration parameters — S07

```
End
```

FIG. 10A

FIG. 10B

FIG. 10C

FIG. 10D

FIG. 10E

FIG. 10F

## FIG. 11

```
                    ( Start )
                        │
          ┌─────────────────────────────────┐
          │ Move suction pad 112 toward object 61 │  S101
          └─────────────────────────────────┘
                        │
                    ◇ S102
      Suction pad 112 in contact with object 61?  ── No
                        │
                       Yes
          ┌─────────────────────────────────┐
          │ Cause suction pad 112 to suck object 61 │  S103
          └─────────────────────────────────┘
                        │
          ┌─────────────────────────────────┐
          │          Lift object 61          │  S104
          └─────────────────────────────────┘
                        │
                    ◇ S105
          Object 61 successfully lifted?  ── No
                        │
                       Yes
          ┌─────────────────────────────────┐
          │ Transport object 61 to intended position │  S106
          └─────────────────────────────────┘
                        │
          ┌─────────────────────────────────┐
          │ Lower object 61 to intended position │  S107
          └─────────────────────────────────┘
                        │
                    ◇ S108
  Object 61 in contact with surface at intended position?  ── No
                        │
                       Yes
          ┌─────────────────────────────────┐
          │ Release sucking by suction pad 112 │  S109
          └─────────────────────────────────┘
                        │
                    ( End )
```

## FIG. 12A

Side view

{P, φ}: Position and orientation of hand end

$P_o$: Offset of pad installation position

Point of contact

$P_r$: Pad radius

## FIG. 12B

Top view

X

C

θ

Y

# FIG. 13

Start

Move suction pad toward workpiece — S10

In contact? — S12 — No

Yes

Entirely in contact? — S14 — No

Yes

Calculate point of contact — S16

Rotate about point of contact — S18

Entirely in contact? — S20 — No

Yes

End — S22

## FIG. 14

# FIG. 15

```
                        ┌──────────────┐
                        │    Start     │
                        └──────────────┘
                               │
                               ▼
        ┌────────────────────────────────────────────┐
        │ Move suction pad gripping workpiece toward  │  S210
        │                  platform                   │
        └────────────────────────────────────────────┘
                               │
                               ▼
                                          S212
              ◇◇◇◇◇◇◇◇◇◇◇◇◇◇◇◇◇◇◇◇◇◇◇◇◇◇◇
                    In contact?              No
              ◇◇◇◇◇◇◇◇◇◇◇◇◇◇◇◇◇◇◇◇◇◇◇◇◇◇◇
                          │ Yes
                          ▼
                                          S214
              ◇◇◇◇◇◇◇◇◇◇◇◇◇◇◇◇◇◇◇◇◇◇◇◇◇◇◇
                 Entirely in contact?        No
              ◇◇◇◇◇◇◇◇◇◇◇◇◇◇◇◇◇◇◇◇◇◇◇◇◇◇◇
                          │ Yes
                          │               ▼
                          │   ┌──────────────────────────────┐
                          │   │   Calculate point of contact  │  S216
                          │   └──────────────────────────────┘
                          │               │
                          │               ▼
                          │   ┌──────────────────────────────┐
                          │   │   Rotate about point of contact│  S218
                          │   └──────────────────────────────┘
                          │               │
                          │               ▼
                          │                          S220
                          │     ◇◇◇◇◇◇◇◇◇◇◇◇◇◇◇◇◇◇◇◇◇◇◇
                          │       Entirely in contact?    No
                          │     ◇◇◇◇◇◇◇◇◇◇◇◇◇◇◇◇◇◇◇◇◇◇◇
                          │               │ Yes
                          ▼◄──────────────┘
                  ┌──────────────┐
                  │     End      │  S222
                  └──────────────┘
```

FIG. 16A

FIG. 16B

# FIG. 17

EP 3 970 927 B1

# FIG. 18

```
                    (  Start  )
                         │
   ┌─────────────────────────────────────────┐
   │  Move suction pad 112 toward object 61   │─ S201
   └─────────────────────────────────────────┘
                         │
              ◇ S202                        No
        Suction pad 112 in contact with ───────┐
               object 61?                       │
                   │ Yes                         │
   ┌─────────────────────────────────────────┐ │
   │   Cause suction pad 112 to suck object 61│─ S203
   └─────────────────────────────────────────┘ │
                         │                       │
   ┌─────────────────────────────────────────┐ │
   │             Lift object 61               │─ S204
   └─────────────────────────────────────────┘
                         │
              ◇ S205                        No
        Object 61 successfully lifted? ──────
                   │ Yes
   ┌─────────────────────────────────────────┐
   │  Transport object 61 to intended position│─ S206
   └─────────────────────────────────────────┘
                         │
              ◇ S207                        Yes
   Suction pad 112 being transported ──────────┐
            vibrating?                          │
                   │ No        S208             │ S212
   ┌──────────────────────────────────┐  ┌──────────────────┐
   │ Transport object 61 to intended  │  │ Control tilting of│
   │         position                 │  │  suction pad 112  │
   └──────────────────────────────────┘  └──────────────────┘
                         │
   ┌─────────────────────────────────────────┐
   │   Lower object 61 to intended position   │─ S209
   └─────────────────────────────────────────┘
                         │
              ◇ S210                        No
   Object 61 in contact with surface ──────
         at intended position?
                   │ Yes
   ┌─────────────────────────────────────────┐
   │     Release sucking by suction pad 12    │─ S211
   └─────────────────────────────────────────┘
                         │
                    (  End  )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011107011 A
- EP 1070572 A1
- JP 2019027456 A
- US 20160243708 A1
- US 20140161582 A
- US 20150008689 A1